(19) Europäisches Patentamt / European Patent Office / Office européen des brevets

(11) **EP 3 779 933 B1**

(12) **EUROPEAN PATENT SPECIFICATION**

(45) Date of publication and mention
of the grant of the patent:
**10.04.2024 Bulletin 2024/15**

(21) Application number: **19777685.9**

(22) Date of filing: **28.03.2019**

(51) International Patent Classification (IPC):
*G09F 3/02* *(2006.01)*      *B32B 27/00* *(2006.01)*
*B32B 27/40* *(2006.01)*      *C08J 7/04* *(2020.01)*
*C09D 7/61* *(2018.01)*       *C09D 175/04* *(2006.01)*
*C09J 7/22* *(2018.01)*       *B65D 25/20* *(2006.01)*
*C08J 7/043* *(2020.01)*      *C08J 7/044* *(2020.01)*
*C08J 7/046* *(2020.01)*      *C08L 23/06* *(2006.01)*
*C08L 23/12* *(2006.01)*      *C08L 75/04* *(2006.01)*

(52) Cooperative Patent Classification (CPC):
(C-Sets available)
**C08J 7/043; B32B 27/00; B32B 27/40; C08J 7/044;
C08J 7/046; C08L 23/12; C09D 7/61; C09D 175/04;
C09J 7/22; G09F 3/02;** B65D 25/20; C08J 2323/06;
C08J 2323/12; C08J 2475/04; C08L 2205/03

(Cont.)

(86) International application number:
**PCT/JP2019/013881**

(87) International publication number:
**WO 2019/189699 (03.10.2019 Gazette 2019/40)**

(54) **LAMINATE AND ADHESIVE LABEL**

LAMINAT UND HAFTETIKETT

ÉTIQUETTE ADHÉSIVE ET STRATIFIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2018 JP 2018068719**

(43) Date of publication of application:
**17.02.2021 Bulletin 2021/07**

(73) Proprietor: **Yupo Corporation
Tokyo 101-0062 (JP)**

(72) Inventors:
• **KIKUCHI, Daisuke
Kamisu-shi, Ibaraki 314-0102 (JP)**
• **ZAMA, Takahiro
Kamisu-shi, Ibaraki 314-0102 (JP)**

(74) Representative: **Zimmermann & Partner
Patentanwälte mbB
Postfach 330 920
80069 München (DE)**

(56) References cited:
**WO-A1-2015/072331      JP-A- 2001 316 650
US-A1- 2010 243 151**

• **DATABASE WPI Week 200163 Thomson
Scientific, London, GB; AN 2001-560163
XP002804768, & JP 2001 034004 A (OJI YUKA
GOSEISHI KK) 9 February 2001 (2001-02-09)**
• **DATABASE WPI Week 201751 Thomson
Scientific, London, GB; AN 2017-499210
XP002804769, & JP 2017 124531 A (TOYO INK CO
LTD) 20 July 2017 (2017-07-20)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Remarks:
The file contains technical information submitted after the application was filed and not included in this specification

(52) Cooperative Patent Classification (CPC): (Cont.)

C-Sets
**C08L 23/12, C08L 23/12, C08L 23/06, C08K 3/26; C09D 175/04, C08K 3/36**

Remarks:
The file contains technical information submitted after the application was filed and not included in this specification

**Description**

Technical Field

The present invention relates to a laminate and an adhesive label comprising the laminate. More specifically, the present invention relates to a laminate excellent in the abrasion resistance of information printed on the surface, and an adhesive label comprising the laminate, particularly, an adhesive label with printed label information based on GHS established by the United Nations (GHS label).

Background Art

Various labels have been studied according to required properties for providing containers with printed labels. Examples of substrates for labels include an in-mold label consisting of a coextruded plastic film containing a heat-activatable ethylene copolymer adhesive layer (heat seal layer) (see Patent Literature 1), an in-mold label having a embossed heat-sealable resin layer (see Patent Literature 2), a plastic resin film that has a surface coating composed mainly of polyethylenimine and is excellent in printability (see Patent Literature 3), an electrophotographic label printable using a heat fixing-type electrophotographic printer or a heat fixing-type electrophotographic copier (see Patent Literature 4), and a thermoplastic resin film layer that is excellent in antistatic properties and also excellent in printability or water resistance (see Patent Literature 5).

Meanwhile, as for the classification of chemicals or the labeling of containers containing chemicals, labeling methods or contents such as handling precautions have heretofore been entrusted to each country and have differed largely among countries under such a circumference. In recent years, however, such chemicals have been exported and imported across borders.

In response to this situation, the need of globally harmonized classification and labeling methods of chemical substances has become recognized in order to safely produce, use, transport, treat, or discard chemical substances irrespective of countries. The United Nations (UN) have established the GHS (The Globally Harmonized System of Classification and Labelling of Chemicals) document.

GHS labels based on this GHS document need to label, for example, hazard information as to substances or mixtures judged (classified) to be hazardous. Hence, the GHS labels are required to have, for example, antirust performance. Patent Literature 6 discloses an antirust film that is excellent in antirust effect and allows the contents to be viewed from the outside. Document "DATABASE WPI; Week 200163; Thomson Scientific, London, GB; AN 2001-450163 & JP 2001-034004 A" describes a label paper for an electrophotograph containing a toner receiving layer. For the toner receiving layer, an acrylic urethane-based resin and a filler may be used.

Citation List

Patent Literature

Patent Literature 1: U.S. Patent No. 4837075
Patent Literature 2: Japanese Utility Model Laid-Open No. 1-105960
Patent Literature 3: Japanese Patent Laid-Open No. 2000-290411
Patent Literature 4: Japanese Patent Laid-Open No. 2003-345052
Patent Literature 5: International Publication No. WO 2015/072331
Patent Literature 6: Japanese Patent Laid-Open No. 2016-169311

Summary of Invention

Technical Problem

GHS labels are required to have various properties in addition to those described above. One example of such properties includes the British Standards BS5609: 1986, which require labels performance regarding the permanence and durability of label materials and adhesives in a sea water immersion test for 3 months (section 2) and printing performance as to artificial weathering, a tape peeling test and an abrasion resistance test (section 3).

Accordingly, an object of the present invention is to provide a laminate that can be adapted to electrophotographic printing in the form of an adhesive label and has excellent abrasion resistance of printing information required by BS5609: 1986, and an adhesive label.

Solution to Problem

The present inventors have conducted diligent studies and consequently completed the present invention by finding that a laminate comprising a surface coating layer and a thermoplastic resin film layer is obtained as a laminate that is excellent in water resistance (adhesion upon immersion in water) and abrasion resistance as the printing performance of an adhesive label having a printed layer established by electrophotographic printing or the like, by using a specific component constituting the surface coating layer and a specific content, etc. thereof.

Specifically, the present invention provides the following <1> to <3>.

<1> A laminate comprising a surface coating layer and a thermoplastic resin film layer, wherein

the surface coating layer contains 70 to 99% by mass of a polyurethane resin, and 1 to 25% by mass of colloidal silica sol having a metal oxide layer on the surface, the metal oxide contains aluminum,
an amount of the surface coating layer applied to the thermoplastic resin film layer is 0.07 to 20 $g/m^2$ in terms of a solid content after drying per unit area, and
the thermoplastic resin film layer contains an olefin-based resin.

<2> An adhesive label having a pressure-sensitive adhesive layer disposed on one surface of a laminate, wherein

the laminate is a laminate according to <1> comprising a surface coating layer and a thermoplastic resin film layer, and
the adhesive label comprises the surface coating layer, the thermoplastic resin film layer, and the pressure-sensitive adhesive layer in the presented order.

<3> The adhesive label according to <2>, wherein a printed layer displayed by electrophotographic printing or inkjet printing is disposed on a surface of the surface coating layer on a side that does not face the thermoplastic resin film layer, wherein
abrasion resistance of a black printed portion of the printed layer as measured in accordance with BS5609: 1986 is 2 or higher in gray scale evaluation.

Advantageous Effects of Invention

The laminate and the adhesive label according to the present invention can be adapted to electrophotographic printing and/or inkjet printing and are excellent in printing performance such as water resistance and abrasion resistance. Particularly, the laminate and the adhesive label according to the present invention have abrasion resistance conforming to BS5609: 1986 and as such, are very useful for GHS label purposes.

Brief Description of Drawing

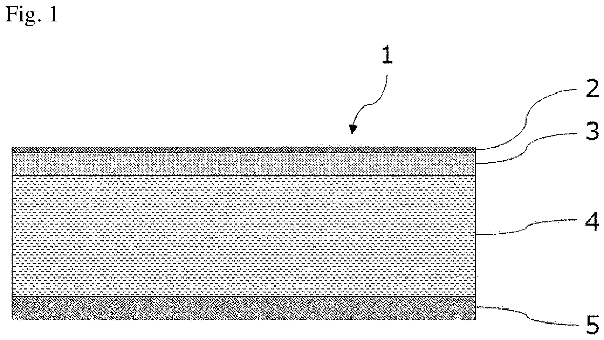

[Fig. 1] Fig. 1 is a schematic cross-sectional view showing one aspect of the configuration of the adhesive label of the present invention.

Description of Embodiments

Hereinafter, embodiments of the present invention will be described in detail.

<Laminate>

The laminate according to the present invention comprises a surface coating layer and a thermoplastic resin film layer, wherein the surface coating layer contains 70 to 99% by mass of a polyurethane resin, and 1 to 25% by mass of a fine particle having a metal oxide, an amount of the surface coating layer applied to the thermoplastic resin film layer is 0.07 to 20 $g/m^2$ in terms of a solid content after drying per unit area, and the thermoplastic resin film layer contains an olefin-based resin.

(Surface coating layer)

The surface coating layer is a layer disposed on the thermoplastic resin film layer and functions as a toner or ink receiving layer when a printed layer is displayed by electrophotographic printing or inkjet printing in the form of an adhesive label.

Characteristics such as the abrasion resistance of a printed layer and antistatic properties, printability, water resistance, and storage stability as an adhesive label can be adjusted through the properties of the surface coating layer.

The surface coating layer contains more than 70% by mass of a polyurethane resin and thereby has high chemical affinity for the thermoplastic resin film layer or a printed layer and adheres thereto more strongly. Hence, adhesion to these layers is improved. Furthermore, the surface coating layer itself has high condensation force as a coating film and is excellent in abrasion resistance and also excellent in water resistance, and therefore achieves even favorable abrasion resistance. The content of the polyurethane resin is more than 70% by mass.

On the other hand, when the surface coating layer further contains a fine particle having a metal oxide mentioned later, the content of the polyurethane resin is preferably 99% by mass or less, more preferably 90% by mass or less, from the viewpoint of improving antistatic performance and improving sheet passability during electrophotographic printing.

In the present specification, the adhesion of a printed layer means adhesion when cellophane tape attached thereon is peeled by 180 degrees, and means adhesion under dry conditions and/or water immersion conditions. The abrasion resistance of a printed layer means the separation of the printed layer (print) in an abrasion test mentioned later.

The polyurethane resin is preferably established as a solvent dispersion of the polyurethane resin dispersed in a solvent (polyurethane resin emulsion) on the thermoplastic resin film layer.

The polyurethane resin emulsion may be nonionic. When the surface coating layer contains a fine particle having a metal oxide, the polyurethane resin emulsion may have the same type of ionicity as that of the fine particle, or may have the same type of ionicity as that of a coating composition. This can prevent the aggregation of the fine particle having a metal oxide in a coating composition for forming the surface coating layer. As a result, the fine particle having a metal oxide can be stably dispersed in the coating composition.

When the fine particle having a metal oxide is, for example, cationic, the polyurethane resin emulsion is also preferably cationic and all materials to be contained in the coating composition is more preferably selected from cationic substances. On the contrary, when the polyurethane resin emulsion and the fine particle having a metal oxide are nonionic, all materials to be contained in the coating composition is more preferably selected from nonionic substances.

When the surface coating layer contains a fine particle having a metal oxide, the weight-average molecular weight of the polyurethane resin in the polyurethane resin emulsion is preferably 1000 or more, more preferably 3000 or more, further preferably 5000 or more, because the fine particle adheres easily to a surface of the thermoplastic resin film layer for solidification.

When the polyurethane resin emulsion is cationic, the emulsion is a dispersion of a copolymer with a cationic group introduced in the polyurethane resin skeleton in a solvent system.

The concentration of the copolymer in the polyurethane-based resin emulsion is preferably 5% by mass or more, more preferably 10% by mass or more, further preferably 20% by mass or more. Also, the concentration of the copolymer is preferably 50% by mass or less, more preferably 40% by mass or less, further preferably 30% by mass or less.

The copolymer can be formed, for example, by reacting a compound having two epoxy groups in one molecule with secondary amine, further reacting the resulting tertiary amino group-containing polyol with polyisocyanate to obtain urethane resin, and quaternizing the urethane resin with the quaternizing agent.

The copolymer may be formed by adding one or more selected from the group consisting of: N,N-dialkylalkanolamines; N-alkyl-N,N-dialkanolamines such as N-methyl-N,N-diethanolamine and N-butyl-N,N-diethanolamine; and trialkanolamines, to a portion of the polyol, reacting the mixture with polyisocyanate, and quaternizing the resulting urethane resin with the quaternizing agent.

The solvent for use in the polyurethane resin emulsion preferably has a water-soluble solvent, more preferably has water, and further preferably has 90% by mass or more of water. This can suppress the dissolution of the polyurethane resin in the solvent and improves the stability of the dispersion. Furthermore, a charge bilayer is stably formed on a surface of the fine particle having a metal oxide. As a result, the stability of the dispersion of the fine particle having a metal oxide is improved.

Examples of the method for preparing the emulsion by dispersing a copolymer with a cationic hydrophilic group introduced in the polyurethane resin skeleton having a quaternary ammonium salt structure in the molecule in water include a method of emulsifying and dispersing monomers constituting the polymer of interest in water, followed by polymerization, and a method of obtaining the polymer of interest by bulk polymerization or the like, and then sequentially performing the melt kneading and emulsification of the raw resin using a twin-screw extruder.

The amount of the cation introduced in the copolymer with a cationic hydrophilic group introduced in the polyurethane resin skeleton having a quaternary ammonium salt structure in the molecule is evaluated from a colloid equivalent obtained by a colloid titration method of the polyurethane resin emulsion with a polyvinyl sulfuric acid potassium salt solution.

For stable presence of the fine particle having a metal oxide dispersed in the coating composition for the surface coating layer, the colloid equivalent of the polyurethane resin emulsion is preferably 0.002 meq/g or more, more preferably 0.006 meq/g or more, further preferably 0.01 meq/g or more.

On the other hand, too large an amount of the cation in the copolymer with a cationic hydrophilic group introduced in the polyurethane resin skeleton having a quaternary ammonium salt structure in the molecule tends to elevate the rate of redissolution of the surface coating layer in water. Accordingly, the colloid equivalent of the polyurethane resin emulsion is preferably 0.05 meq/g or less, more preferably 0.04 meq/g or less, further preferably 0.03 meq/g or less.

The surface coating layer may further contain an organic polymer other than the polyurethane resin. Examples thereof include vinyl-based resins. Examples of the vinyl-based monomer serving as a precursor of the vinyl-based resin include one or more selected from the group consisting of: olefins; vinyl esters; unsaturated carboxylic acids and their alkali metal salts or acid anhydrides; esters of alkyl groups having up to 12 carbon atoms and optionally having a branched or cyclic structure; (meth)acrylamide, and derivatives having an alkyl group having 1 to 4 carbon atoms and an alkylene group having 1 or 2 carbon atoms at the same time; and dimethyl diallyl ammonium salts. The salt is an acid residue, and such an acid ion is preferably a methyl sulfate ion or a chloride ion. In the present specification, (meth)acrylamide means at least any one compound of acrylamide and methacrylamide. Other terms such as poly(meth)acrylic acid also mean at least any one of an acrylic compound and a methacrylic compound.

The surface coating layer contains a fine particle having a metal oxide from the viewpoint of antistatic properties, and adherence properties to the thermoplastic resin film layer. The surface coating layer contains at least one of a sol of an inorganic particle having a layer of a metal oxide on the surface, and a metal oxide sol. Further preferably, the metal oxide is silicon oxide from the viewpoint of antistatic properties.

The sol of an inorganic particle includes colloidal silica sol having a metal oxide layer containing aluminum on the surface of colloidal silica.

Examples of the method for producing the colloidal silica sol include, but are not particularly limited to, a method of using an aqueous silicic acid alkali metal salt solution (e.g., liquid glass) as a raw material, removing the alkali metal salt by ion exchange resin or electrophoresis, etc. to prepare a silicic anhydride sol, and further adjusting pH by the addition of an acid or an alkali for stabilization, a method of hydrolyzing alkoxide such as tetraethoxide orthosilicate (TEOS) with an acid or an alkali (so-called sol-gel method), and a method of introducing an organosilicon compound such as silicon tetrachloride to hydrogen flame or the like for synthesis (so-called vapor phase method).

The colloidal silica sol may be a cationic colloidal silica sol or may be an anionic colloidal silica sol. Alternatively, the colloidal silica sol may be a cationic compound-coated colloidal silica sol which is an anionic colloidal silica surface-coated with a cationic compound. The cationic compound-coated colloidal silica sol may be a metal oxide-coated colloidal silica sol containing anionic colloidal silica surface-coated with a metal oxide.

The cationic compound-coated colloidal silica sol is obtained, for example, by adding a cationic compound or a precursor thereof to a colloidal silica sol in a dispersion step of dispersing silica in a dispersion medium or any of subsequent steps.

The metal oxide-coated colloidal silica sol is obtained, for example, by adding a metal oxide or a precursor thereof to a colloidal silica sol in a silica dispersion step or any of subsequent steps. For example, an alumina-coated colloidal silica sol is obtained by surface-treating colloidal silica by the addition of a water-soluble salt of aluminum to a colloidal silica sol.

Use of a cationic alumina-coated colloidal silica sol as the fine particle having a metal oxide improves at least one of antistatic properties and printability ascribable to general commercial printers, as compared with use of an anionic colloidal silica sol.

The colloidal silica particle contained in the colloidal silica sol may have a silanol group (=Si-OH) on the surface. Also, the particle may be a monodisperse fine particle.

The CV value (coefficient of variation) [%] of the particle is preferably 15% or less, more preferably 10% or less, further preferably 5% or less. The particle may be in a long chain form of particles.

Examples of the metal oxide sol include silicon oxide sols, hafnium oxide sols, zirconium oxide sols, zinc oxide sols, titanium oxide sols, yttrium oxide sols, aluminum oxide sols, copper oxide sols, germanium oxide sols, tungsten oxide sols, indium oxide sols, and tin oxide sols.

Examples of the method for producing the metal oxide sol, for example, an aluminum oxide sol, include a method of hydrolyzing alkoxide such as aluminum isopropoxide with an acid for production, and a method of introducing aluminum chloride to hydrogen flame or the like for synthesis (so-called vapor phase method).

The particle contained in the metal oxide sol may be a monodisperse fine particle. The CV value (coefficient of variation) [%] of the particle is preferably 15% or less, more preferably 10% or less, further preferably 5% or less. The particle may be in a long chain form of particles.

The metal oxide for use in the colloidal silica sol having a layer of the metal oxide on the surface of colloidal silica, and the metal oxide sol has aluminum.

When the metal oxide is alumina, the colloidal silica sol having a layer of the metal oxide on the surface of colloidal silica, and the metal oxide sol each have a cationic surface, which improves at least one of antistatic properties and printability ascribable to general commercial printers.

The average primary particle size of the fine particle having a metal oxide is preferably 200 nm or less, more preferably 100 nm or less, further preferably 25 nm or less. When the average particle size of the fine particle having a metal oxide is 200 nm or less, the thermoplastic resin film layer easily exerts surface glossiness and also easily exerts antistatic properties. Furthermore, the strength of a coating film is further improved.

On the other hand, the average primary particle size of the fine particle having a metal oxide is preferably 1 nm or more, more preferably 4 nm or more, further preferably 7 nm or more. When the average primary particle size is 1 nm or more, the particle is more easily produced. The average primary particle size of the fine particle having a metal oxide is calculated as an average value of area equivalent circle diameters of particles observed under a transition electron microscope (TEM).

The surface coating layer preferably contains 1% by mass or more of the fine particle having a metal oxide based on the whole surface coating layer because antistatic properties and adherence properties to the thermoplastic resin film layer are improved. The surface coating layer more preferably contains 10% by mass or more thereof. Furthermore, the attachment of dust to a print head in a printing method using a printer having the print head can be suppressed, and the fusion of the surface coating layer to a heat roller in a printing process having a heat fixing process can be suppressed.

On the other hand, the surface coating layer contains less than 25% by mass, of the fine particle having a metal oxide based on the whole surface coating layer. The adhesion of a printed layer is improved. For the same reason, the ratio between the mass of the fine particle having a metal oxide and the mass of the polyurethane resin in the coating composition for forming the surface coating layer is preferably 1:99 to 29:71, more preferably 1:99 to 34:66 or 10:90 to 29:71, further preferably 10:90 to 34:66.

The surface coating layer may further contain a component derived from a water-soluble polymer. The water-soluble polymer preferably has a property of being dissolved in water in the coating composition containing surface coating layer materials, and also has a property of being not redissolved in water after coating of the surface of the thermoplastic resin film layer with the coating composition and drying.

Examples of the water-soluble polymer include: vinyl-based copolymers such as polyvinylpyrrolidone; hydrolysates of vinyl-based copolymers such as partially saponified polyvinyl alcohol (hereinafter, also referred to as "PVA"), fully saponified PVA, and alkali metal salts or ammonium salts of isobutylene-maleic anhydride copolymers; (meth)acrylic acid derivatives such as sodium poly(meth)acrylate and poly(meth)acrylamide; modified polyamide; cellulose derivatives such as carboxymethylcellulose and carboxyethylcellulose; ring-opened polymers and modified products thereof, such as polyethylenimine, polyethylene oxide, and polyethylene glycol; and natural polymers and modified products thereof, such as gelatin and starch.

Among them, partially saponified PVA, fully saponified PVA, polyethylenimine, or modified polyethylenimine is preferably used.

The surface coating layer preferably contains 0 parts by mass or more and 30 parts by mass or less of the water-soluble polymer per 100 parts by mass in total of the polyurethane resin emulsion, other organic polymer emulsions and the fine particle having a metal oxide. The surface coating layer more preferably contains 1 part by mass or more, further preferably 3 parts by mass or more, of the water-soluble polymer from the viewpoint of preventing the fine particle having a metal oxide from easily falling off from the thermoplastic resin film layer surface. On the other hand, the surface coating layer more preferably contains 20 parts by mass or less, further preferably 10 parts by mass or less, of the water-soluble polymer from the viewpoint of attaining suitable printability and processability of the thermoplastic resin film layer surface.

Since the water-soluble polymers other than fully saponified PVA are redissolved in water after coating and drying as the coating composition, it is preferred to add a crosslinking agent. The crosslinking agent is not particularly limited as long as the crosslinking agent is a substance that reacts with the water-soluble polymer for use in the coating composition. Examples thereof include: carbodiimides; diisocyanates; and diglycidyl ethers.

The crosslinking agent is preferably contained at 0.1 parts by mass or more, more preferably 1 part by mass or more, further preferably 10 parts by mass or more, per 100 parts by mass of the water-soluble polymer. Also, the crosslinking agent is preferably contained at 200 parts by mass or less, more preferably 180 parts by mass or less, 160 parts by mass or less, per 100 parts by mass of the water-soluble polymer. Alternatively, the crosslinking agent may be contained at 50 to 150 parts by mass per 100 parts by mass of the water-soluble polymer.

In the case of establishing the surface coating layer on the thermoplastic resin film layer, its surface is preferably coated with a coating composition containing at least the polyurethane resin emulsion and the fine particle having a metal oxide and then dried. The coating composition is preferred because its formulation and coating are easily performed and time-dependent change of properties (particularly, viscoelasticity and corruption) is less likely to occur.

In the step of producing the coating composition, for example, when the solid concentration of the polyurethane resin emulsion and the fine particle having a metal oxide is high, when pH of the coating composition is close to the isoelectric point of the polyurethane resin, when the zeta potentials of the polyurethane resin emulsion and the fine particle having a metal oxide have a reversed sign relationship, or when an ionic substance having a high valence (particularly, a polymer having a functional group) is added, at least one of the polyurethane resin emulsion and the fine particle having a metal oxide may aggregate.

Accordingly, in the step of producing the coating composition, it is preferred to adjust the concentration of each material so as not to locally elevate the concentration, by adding each material to dilution water in order or by appropriately adjusting the order or rate of addition. In the step of producing the coating composition, the repulsive force of particles may be enhanced by the pH adjustment of the coating composition or by the addition of a dispersant. These procedures can suppress aggregation.

The solid concentration of the surface coating layer materials in the coating composition can be appropriately adjusted according to a coating mass of the surface coating layer after drying and a coating method for the coating composition and is preferably 0.5% by mass or more, more preferably 3% by mass or more, and preferably 35% by mass or less, more preferably 20% by mass or less, further preferably 15% by mass or less.

Too large a thickness of the surface coating layer may cause cohesive failure of a component of the surface coating layer within the surface coating layer upon application of external force. As a result, the adhesion between the thermoplastic resin film layer and the surface coating layer may be reduced, resulting in reduced water resistance or abrasion resistance of a printed layer. Accordingly, the amount of the surface coating layer applied to the thermoplastic resin film layer (also referred to as a "coating mass") is preferably 20 g/m$^2$ or less, more preferably 5 g/m$^2$ or less, particularly preferably 3 g/m$^2$ or less, and may further be 1 g/m$^2$ or less, in terms of a solid content after drying per unit area,.

On the other hand, too small a thickness of the surface coating layer formed by coating does not produce a sufficient coating film because a component of the surface coating layer cannot be homogeneously present on the surface of the thermoplastic resin film layer. Therefore, the water resistance or abrasion resistance of a printed layer may be insufficient. Accordingly, the coating mass is preferably 0.07 g/m$^2$ or more, more preferably 0.1 g/m$^2$ or more, particularly preferably 0.15 g/m$^2$ or more.

The coating mass of the surface coating layer is determined by subtracting the mass of the film before coating of the thermoplastic resin film layer with the coating composition from the wet mass of the film immediately after the coating to calculate a wet coating mass, and multiplying this wet coating mass by the solid concentration of the coating composition to determine a coating mass after drying. However, in an unavoidable case, the coating mass after drying may be directly determined by peeling the surface coating layer from the thermoplastic resin film layer, and measuring its mass, or the coating mass after drying may be calculated by observing the cross-section of a sample under a scanning electron microscope to determine the thickness of the surface coating layer, and multiplying this thickness by the density of the solid content of the coating composition.

Each material contained in the coating composition needs not to aggregate. The pH of the coating composition is preferably 3 to 11, more preferably 4 or more, and more preferably 10 or less, from the viewpoint of worker's safety and the prevention of machinery corrosion.

(Thermoplastic resin film layer)

The thermoplastic resin film layer may have a single-layer configuration or a 2-layer or more multilayer configuration. The thermoplastic resin film layer preferably contains a thermoplastic resin that can be used in a substrate layer mentioned later, because the thermoplastic resin film layer is very superior in water resistance and durability to a paper substrate. The thermoplastic resin film layer more preferably contains an olefin-based resin.

The thermoplastic resin film layer preferably comprises a polyester film, a polyethylene film, or a polypropylene film. This produces a thermoplastic resin film layer excellent in formability or durability.

The thermoplastic resin film layer is preferably stretched at least in the uniaxial direction, also preferably has at least one layer stretched in the biaxial direction, and also preferably has at least one layer obtained by calender forming.

In one embodiment, the thermoplastic resin film layer comprises at least a front face, a substrate layer containing a thermoplastic resin, and a back face in the presented order. In this case, the thermoplastic resin film layer has the surface coating layer containing the polyurethane resin on the front face side and has a pressure-sensitive adhesive layer mentioned later on the back face side.

In another embodiment, the thermoplastic resin film layer comprises at least a front face, a substrate layer, a strengthening layer and a back face in the presented order. In this case, the thermoplastic resin film layer has the surface coating layer on the front face side and has a pressure-sensitive adhesive layer on the back face side.

The strengthening layer has a function of adhering strongly to an external object when the thermoplastic resin film layer adheres on its back face side to the external object. The present embodiment provides a thermoplastic resin film layer suitable for adhering to an external object.

In an alternative embodiment, the thermoplastic resin film layer comprises at least a front face, a highly smooth layer, a substrate layer and a back face in the presented order. In this case, the thermoplastic resin film layer has the surface coating layer on the front face side and has a pressure-sensitive adhesive layer on the back face side.

The highly smooth layer has a function of enhancing the gloss of the front face of the thermoplastic resin film layer. The present embodiment provides a thermoplastic resin film layer suitable for having surface gloss.

Hereinafter, preferred forms of each layer constituting the thermoplastic resin film layer will be described. However, the thermoplastic resin film layer is not limited by these forms.

• Substrate layer

The substrate layer may have a 1-layer configuration, a 2-layer configuration, or a 3-layer or more multilayer configuration. When the substrate layer has a layer configuration of two or more layers, these layers may assume a symmetric layer configuration or an asymmetric layer configuration.

The substrate layer contains a thermoplastic resin. The thermoplastic resin for use in the substrate layer is not particularly limited by its type as long as the thermoplastic resin is capable of forming a film. Examples thereof include: olefin-based resins such as high-density polyethylene, medium-density polyethylene, low-density polyethylene, polypropylene, propylene-based copolymer resins, polymethyl-1-pentene, and ethylene/cyclic olefin copolymers; styrene-based resins such as atactic polystyrene, syndiotactic polystyrene, and styrene-maleic acid copolymers; ester-based resins such as polyethylene terephthalate, polyethylene terephthalate isophthalate, polybutylene terephthalate, polybutylene succinate, polybutylene adipate, and polylactic acid; functional group-containing polyolefin resins such as ethylene/vinyl acetate copolymers, ethylene/acrylic acid copolymers, maleic acid-modified polyethylene, and maleic acid-modified polypropylene; amide-based resins, such as nylon-6 and nylon-6,6; and polycarbonate. Among these resins, one type or a mixture of two or more types can be used.

Among these thermoplastic resins, an olefin-based resin or a functional group-containing olefin-based resin is preferred, and an olefin-based resin is more preferably used, from the viewpoint of excellent processability of the film. Among the olefin-based resins, an ethylene-based resin or a propylene-based resin is preferred from the viewpoint of chemical resistance, processability, and low cost.

Examples of the ethylene-based resin include high-density polyethylene, medium-density polyethylene, low-density polyethylene, linear low-density polyethylene, random copolymers or block copolymers of ethylene with $\alpha$-olefin such as propylene, 1-butene, 1-pentene, 1-hexene and 1-heptene, ethylene-vinyl acetate copolymers, ethylene-acrylic acid copolymers, and ethylene-methacrylic acid copolymers.

Examples of the propylene-based resin include: polypropylene that is a homopolymer of propylene and exhibits stereoregularity such as isotacticity, syndiotacticity, or atacticity; and copolymers composed mainly of propylene copolymerized with at least one or more $\alpha$-olefins such as ethylene, 1-butene, 1-hexene, 1-heptene, 1-octene, and 4-methyl-1-pentene. The copolymer may be a random copolymer or a block copolymer.

The olefin-based resin or the functional group-containing olefin-based resin may be graft-modified. Examples of the graft modification include a method of reacting unsaturated carboxylic acid or a derivative thereof in the presence of a peracid such as peracetic acid, persulfuric acid, or potassium persulfate, and a metal salt thereof; or an oxidizing agent such as ozone.

The graft modification percentage is usually 0.005 to 10% by mass, preferably 0.01% by mass or more and preferably 5% by mass or less, based on the olefin-based resin or the functional group-containing olefin-based resin.

When the stretch ratio of stretching during formation of the substrate layer exceeds 3 times in the uniaxial direction, the substrate layer preferably contains 75% by mass or more, more preferably 80% by mass or more, of the thermoplastic resin from the viewpoint of stretching stability. When the stretch ratio of stretching during formation of the substrate layer is 3 times or less in the uniaxial direction, the substrate layer preferably contains 20% by mass or more, more preferably 30% by mass or more, of the thermoplastic resin.

On the other hand, the substrate layer preferably contains 99% by mass or less, more preferably 95% by mass or less, of the thermoplastic resin from the viewpoint of enhancing the opacity or degree of whiteness of the substrate layer.

The substrate layer preferably contains an inorganic fine powder in addition to the thermoplastic resin. The substrate layer containing the inorganic fine powder achieves whitening and opacification and can improve the visibility of a print (printed layer) disposed on a label.

The particle size of the inorganic fine powder is indicated by a volume-average particle size measured by a laser diffraction method. The volume-average particle size is preferably 0.01 $\mu$m or more, further preferably 0.1 $\mu$m or more, from the viewpoint of achieving the whitening and opacification of the substrate layer.

On the other hand, the volume-average particle size is preferably 15 $\mu$m or less, further preferably 5 $\mu$m or less, from the viewpoint of improving the appearance of the thermoplastic resin film layer surface.

Examples of the inorganic fine powder for use in the substrate layer include calcium carbonate, baked clay, silica, diatomaceous earth, white clay, talc, titanium oxide, barium sulfate, alumina, zeolite, mica, sericite, bentonite, sepiolite, vermiculite, dolomite, wollastonite, and glass fiber. Among them, calcium carbonate, talc, or titanium oxide is preferred, and calcium carbonate or titanium oxide is more preferred, from the viewpoint of whitening, opacification and resin moldability, etc.

The surface of such an inorganic fine powder may be hydrophilized or hydrophobized beforehand. These surface treatments can impart various properties such as printability, coatability, abrasion resistance, and secondary processability to the substrate layer.

The substrate layer preferably contains 1% by mass or more, more preferably 5% by mass or more, of the inorganic fine powder from the viewpoint of enhancing the opacity or degree of whiteness of the substrate layer.

On the other hand, when the stretch ratio of stretching exceeds 3 times in the uniaxial direction, the substrate layer preferably contains 25% by mass or less, more preferably 20% by mass or less, of the inorganic fine powder from the viewpoint of stretching stability during formation of the substrate layer. When the stretch ratio of stretching during formation of the substrate layer is 3 times or less in the uniaxial direction, the substrate layer preferably contains 80% by mass or less, more preferably 70% by mass or less, of the inorganic fine powder.

The substrate layer can optionally contain an organic filler, a heat stabilizer (antioxidant), a light stabilizer, a dispersant, a lubricant, an antistatic agent, or the like.

When the substrate layer contains an organic filler, the organic filler is preferably contained at 0.01% by mass or more from the viewpoint of exerting the function of the organic filler.

On the other hand, the organic filler is preferably contained at 20% by mass or less, more preferably 10% by mass or less, from the viewpoint of improving the appearance of the thermoplastic resin film layer.

The organic filler is preferably selected as a resin of different type from the thermoplastic resin serving as a main component of the substrate layer. Among others, it is more preferred to select a resin that exhibits a higher melting point and/or glass transition point than that of the main component thermoplastic resin.

When the thermoplastic resin serving as a main component of the substrate layer is, for example, a polyolefin-based resin (melting point: 80 to 160°C), the organic filler has a melting point of preferably 170 to 300°C and a glass transition point of preferably 170 to 280°C.

Examples of the organic filler exhibiting such a melting point or a glass transition point include polyethylene terephthalate, polybutylene terephthalate, polycarbonate, nylon-6, and nylon-6,6.

On the other hand, the organic filler is more preferably selected as a resin that is not compatible with the thermoplastic resin serving as a main component of the substrate layer. When the thermoplastic resin serving as a main component of the substrate layer is a polyolefin-based resin, examples of the organic filler include the resins listed above as well as polystyrene and polymethyl methacrylate. When the main component thermoplastic resin is a propylene-based resin, examples of the organic filler include the resins listed above as well as high-density polyethylene, low-density polyethylene, and cyclic polyolefin.

When the substrate layer contains a heat stabilizer, the heat stabilizer is preferably contained at 0.001% by mass or more from the viewpoint of exerting the function of the heat stabilizer.

On the other hand, the heat stabilizer is preferably contained at 1% by mass or less, more preferably 0.5% by mass or less, from the viewpoint of improving the appearance of the thermoplastic resin film layer and from the viewpoint of economic performance.

One or two or more selected from among usually known hindered phenolbased, phosphorus-based, and amine-based heat stabilizers (antioxidants), and the like can be appropriately used as the heat stabilizer.

When the substrate layer contains a light stabilizer, the light stabilizer is preferably contained at 0.001% by mass or more from the viewpoint of exerting the function of the light stabilizer.

On the other hand, the light stabilizer is preferably contained at 1% by mass or less, more preferably 0.5% by mass or less, from the viewpoint of improving the appearance of the thermoplastic resin film layer and from the viewpoint of economic performance.

One or two or more selected from among usually known hindered amine-based, benzotriazole-based, and benzophenone-based light stabilizers, and the like can be appropriately used as the light stabilizer. It is also preferred to use the light stabilizer and the heat stabilizer in combination.

When the substrate layer contains a dispersant or a lubricant, the dispersant or the lubricant is preferably contained at 0.01% by mass or more from the viewpoint of exerting the function of the dispersant or the lubricant.

On the other hand, the dispersant or the lubricant is preferably contained at 4% by mass or less, more preferably 2% by mass or less, from the viewpoint of improving the formability and printability of the thermoplastic resin film layer.

One or two or more selected from among usually known silane coupling agents; fatty acids having from 8 to 24 carbon atoms, such as oleic acid and stearic acid, and their metal salts, amides, esters with an alcohol having from 1 to 6 carbon atoms, and the like; poly(meth)acrylic acids and metal salts thereof can be appropriately used as the dispersant or the lubricant.

When the substrate layer contains an antistatic agent, the antistatic agent is preferably contained at 0.5% by mass or more, more preferably 1% by mass or more, from the viewpoint of exerting the function of the antistatic agent.

On the other hand, the antistatic agent is preferably contained at 10% by mass or less, more preferably 5% by mass or less, from the viewpoint of improving the formability and printability of the thermoplastic resin film layer.

One or two or more selected from among usually known silane coupling agents; fatty acids having from 8 to 24 carbon atoms, such as oleic acid and stearic acid, and their metal salts, amides, esters with an alcohol having from 1 to 6 carbon atoms, and the like; poly(meth)acrylic acids and metal salts thereof can be appropriately used as the antistatic agent.

• Strengthening layer

The strengthening layer is a layer disposed on the pressure-sensitive adhesive layer side of the thermoplastic resin film layer and has a function of imparting strength to a label so as not to easily separate an adhesive label from an external object due to the cohesive failure (internal fracture) of the thermoplastic resin film layer when the thermoplastic resin film layer adheres to the external object through the pressure-sensitive adhesive layer.

The resin constituting the strengthening layer may be of the same type as or different type from the resin contained in the substrate layer.

The resin constituting the strengthening layer is preferably a thermoplastic resin having a melting point in the range of 105 to 280°C. Examples thereof include propylene-based resins, high-density polyethylene, and polyethylene terephthalate resin. The resin constituting the strengthening layer may contains one or two or more of these resins.

The resin constituting the strengthening layer may be composed mainly of a propylene-based resin or high-density polyethylene. This produces a strengthening layer excellent in water resistance, chemical resistance, economic performance, etc.

The strengthening layer may contain an inorganic fine powder. When the strengthening layer contains an inorganic fine powder, the content percentage of the inorganic fine powder in the substrate layer is preferably larger than that of the inorganic fine powder in the strengthening layer. This can render the density of the substrate layer smaller than that of the strengthening layer. As a result, while the physical strength of the thermoplastic resin film layer is secured by the strengthening layer; and while the degree of whiteness or opacity of the thermoplastic resin film layer is increased, or the weight of the thermoplastic resin film layer is reduced; the intralayer strength of the strengthening layer and the interlayer strength between the substrate layer and the strengthening layer can be enhanced. Furthermore, the thermoplastic resin film layer can adhere firmly to an external object.

The inorganic fine powder contained in the strengthening layer may be of the same type as or different type from the inorganic fine powder contained in the substrate layer.

The strengthening layer preferably contains 1% by mass or more, more preferably 5% by mass or more, of the inorganic fine powder. This increases the opacity of the strengthening layer.

The strengthening layer preferably contains 20% by mass or less, more preferably 18% by mass or less, of the inorganic fine powder. This improves the intralayer strength of the strengthening layer and the interlayer strength between the substrate layer and the strengthening layer.

The strengthening layer may optionally contain other known additives for resins, as long as they do not inhibit adherence to an external object.

Examples of other additives for resins can include dyes, nucleating agents, plasticizers, mold release agents, flame retardants, antioxidants, light stabilizers, and ultraviolet absorbers. The content of other additives for resins is preferably 10% by mass or less, more preferably 5% by mass or less, based on the whole strengthening layer. This can suppress a phenomenon in which the additives are deposited on a die during continuous film production.

The method for producing a film having the strengthening layer is not particularly limited. The film may be produced, for example, by coextruding the strengthening layer from a die at the same time with the formation of the substrate layer by a multilayer die method using a feed block, multi-manifold, or the like, may be produced by extrusion-laminating the strengthening layer onto the substrate layer using a plurality of dies, or may be produced by laminating the strengthening layer formed as a film onto the substrate layer.

• Highly smooth layer

The highly smooth layer has a function of enhancing the gloss of the front face of the thermoplastic resin film layer. The present embodiment provides a thermoplastic resin film layer suitable for having surface gloss. This can impart glossy appearance to printed information when information is printed on the surface coating layer on the front face of the thermoplastic resin film layer to establish a printed layer. The gloss can be more efficiently enhanced by allowing incident light within the thermoplastic resin film layer to be specularly reflected at the interface between the substrate layer and the highly smooth layer.

The highly smooth layer preferably contains 40 to 100% by mass, more preferably 50 to 100% by mass, of a thermoplastic resin. Also, the highly smooth layer preferably contains 0 to 60% by mass, more preferably 0 to 50% by mass, of at least one of an inorganic fine powder and an organic filler. This enhances surface smoothness and can improve gloss at 20°. The gloss at 20° is measured according to procedures defined in JIS Z8741: 1997.

The opacity of the highly smooth layer is preferably 30% or less. This enhances the transparency of the highly smooth layer and can efficiently extract incident light within the thermoplastic resin film layer. As a result, total light reflectance can be improved.

The highly smooth layer is preferably stretched. When the highly smooth layer contains at least one of an inorganic fine powder and an organic filler, this forms pores with the inorganic fine powder or the organic filler as cores within the highly smooth layer. As a result, total light reflectance can be improved.

The stretching also improves the degree of surface smoothness of the highly smooth layer. As a result, gloss at 20° is improved. When the highly smooth layer does not contain at least one of an inorganic fine powder and an organic filler, the stretching further enhances the degree of surface smoothness of the highly smooth layer.

For the purpose of improving glossy appearance, it is more preferred to draw the highly smooth layer in the biaxial direction.

When the stretching of the highly smooth layer is uniaxial stretching, the pores in the highly smooth layer have a rugby-ball shape. Light reflection in the highly smooth layer is less directional to the incident light and results in so-called diffused reflection. As a result, the degree of gloss is reduced, though the degree of whiteness is improved.

On the other hand, when the stretching of the highly smooth layer is biaxial stretching, the pores in the highly smooth layer have a flatter disk shape, which increases the proportion of specular reflection in the light reflection in the highly smooth layer. As a result, visual glossy appearance is improved.

• Physical properties of thermoplastic resin film layer

The thickness of the thermoplastic resin film layer is measured using a constant pressure thickness gauge according to JIS K 7130: 1999. The thickness of the thermoplastic resin film layer is preferably 20 $\mu$m or more, more preferably 40 $\mu$m or more, further preferably 60 $\mu$m or more, from the viewpoint of preventing easy wrinkling in the form of an adhesive label.

On the other hand, the thickness of the thermoplastic resin film layer is preferably 250 $\mu$m or less, more preferably 200 $\mu$m or less, from the viewpoint of facilitating handling an adhesive label.

The density of the thermoplastic resin film layer is calculated according to the following expression from the value of the thickness obtained by the measurement described above and the value of a basis weight (grammage) obtained by the mass measurement of a sample punched into a size of 10 cm × 10 cm according to a method described in JIS K 7112: 1999.

$$\rho = \mathrm{Wf} \,/\, \mathrm{Tf}$$

$\rho$, Wf and Tf are each defined as follows.
$\rho$: density (g/cm$^3$), of the thermoplastic resin film layer
Wf: basis weight (g/cm$^2$) of the thermoplastic resin film layer
Tf: thickness (cm) of the thermoplastic resin film layer

The density of the thermoplastic resin film layer is preferably 0.5 g/cm$^3$ or more, more preferably 0.6 g/cm$^3$ or more, from the viewpoint of the maintenance of adhesive label surface strength in the form of an adhesive label. On the other hand, the density of the thermoplastic resin film layer is preferably 1.3 g/cm$^3$ or less, more preferably 1.0 g/cm$^3$ or less, from the viewpoint of imparting heat seal strength.

The porosity of the thermoplastic resin film layer is calculated according to the following expression using density $\rho$ obtained by the measurement described above and true density $\rho_0$ obtained by the density measurement of a resin composition for use in the sheet forming of the film.

$$\mathrm{Porosity}\ (\%) = \{(\rho_0 - \rho) \,/\rho_0\} \times 100$$

$\rho_0$ and $\rho$ are each defined as follows.
$\rho_0$: true density of the thermoplastic resin film layer
$\rho$: density of the thermoplastic resin film layer

The porosity of the thermoplastic resin film layer is preferably 1% or more, more preferably 10% or more, from the viewpoint of imparting opacity to an adhesive label in the form of an adhesive label.

On the other hand, the porosity of the thermoplastic resin film layer is preferably 60% or less, more preferably 50% or less, from the viewpoint of the maintenance of the strength of an adhesive label.

<Adhesive label>

The adhesive label according to the present invention has a pressure-sensitive adhesive layer disposed on one surface of the laminate comprising the surface coating layer and the thermoplastic resin film layer, the adhesive label comprises the surface coating layer, the thermoplastic film layer, and the pressure-sensitive adhesive layer in the presented order.

One aspect of the adhesive label according to the present invention includes, for example, an adhesive label comprising, as shown in Fig. 1, printed layer 2, surface coating layer 3, thermoplastic resin film layer 4 and pressure-sensitive adhesive layer 5 in the presented order. A printed layer displayed by electrophotographic printing or ink jet printing is disposed on a surface of the surface coating layer on the side that does not face the thermoplastic resin film layer, and the abrasion resistance of a black printed portion of the printed layer as measured in accordance with BS5609: 1986 is preferably 2 or higher in gray scale evaluation.

Hereinafter, each layer except for the surface coating layer and the thermoplastic resin film layer will be described.

(Printed layer)

The printed layer is a layer positioned on the outermost surface of the adhesive label, and is a layer on which variable information is shown by electrophotographic printing or inkjet printing using a laser printer or the like. Thus, the printed layer can cover at least a partial region of the surface coating layer and does not have to cover the entire region thereof.

The abrasion resistance of a black printed portion of the printed layer as measured in accordance with the British Standards BS5609: 1986 is preferably 2 or higher in gray scale evaluation.

At least black and red colors are printed when the adhesive label is used as a GHS label. Therefore, abrasion resistance in gray scale evaluation of black and red printed portions in the color chart as measured in accordance with BS5609: 1986 is preferably 2 or higher for both the colors, and furthermore, abrasion resistance in the evaluation as to green, blue, cyan, magenta and yellow printed portions is more preferably 2 or higher for more colors.

The abrasion resistance of 2 or higher in the evaluation means favorable abrasion resistance, and the abrasion resistance is more preferably 3 or higher, further preferably 4 or higher.

For obtaining the desired adhesion, water resistance, and abrasion resistance of the printed layer, the content of the polyurethane resin in the surface coating layer described below needs to be more than 65% by mass, preferably 66 to 99% by mass. Further abrasion resistance, etc. can be achieved by using appropriate configuration or the like of the surface coating layer as described in the section (Surface coating layer).

(Pressure-sensitive adhesive layer)

A pressure-sensitive adhesive layer can be disposed on a surface on the side opposite (back face side) to the surface coating layer of the thermoplastic resin film layer so that the back face of the thermoplastic resin film layer can adhere to the outside via the pressure-sensitive adhesive layer. This can allow the adhesive label to bind firmly to a container or the like to be labeled.

Examples of the pressure-sensitive adhesive for use in the pressure-sensitive adhesive layer include pressure-sensitive adhesives such as rubber-based pressure-sensitive adhesives, acrylic pressure-sensitive adhesives, and silicone-based pressure-sensitive adhesives. Various forms such as solution type, emulsion type, and hot melt type can be used.

Examples of the rubber-based pressure-sensitive adhesive can include polyisobutylene rubber, butyl rubber, and their mixtures, and these rubber-based pressure-sensitive adhesives supplemented with a tackifier such as rosin abietate, a terpene/phenol copolymer, or a terpene/indene copolymer.

Examples of the acrylic pressure-sensitive adhesive include pressure-sensitive adhesives having a glass transition point of -20°C or lower, such as 2-ethylhexyl acrylate/n-butyl acrylate copolymers and 2-ethylhexyl acrylate/ethyl acrylate/methyl methacrylate copolymers.

Examples of the silicone-based pressure-sensitive adhesive include additioncurable pressure-sensitive adhesives with a platinum compound or the like as a catalyst, and peroxide-curable pressure-sensitive adhesives which are cured using benzoyl peroxide or the like.

Among them, a pressure-sensitive adhesive that can meet section 2 of BS5609: 1986 is preferably selected for use.

(Release liner)

A release liner can be disposed, if necessary, on a surface on the side opposite to the thermoplastic resin film layer of the pressure-sensitive adhesive layer for the purpose of protecting the pressure-sensitive adhesive surface.

For example, high-quality paper or kraft paper itself, high-quality paper or kraft paper treated by calendering, coated with a resin, or laminated with a film, or glassine paper, coated paper, a plastic film, or the like treated with silicone can be used as the release liner. Among them, a release liner with a silicone-treated surface to be in contact with the pressure-sensitive adhesive layer is preferably used because of favorable peelability from the pressure-sensitive adhesive layer.

< <Method for producing laminate>>

<Production of thermoplastic resin film layer>

The thermoplastic resin film layer may be an unstretched film or a stretched film, irrespective of its layer configuration. Its forming is preferably extrusion forming.

Examples of the method of forming the thermoplastic resin film layer can include: cast forming which involves melt-kneading film raw materials with an extruder set to a temperature higher than the melting point or glass transition point of the thermoplastic resin constituting the thermoplastic resin film layer, extruding the melt-kneaded product into a sheet using a T-die, an I-die, or the like, and cooling the sheet using a metal roll, a rubber roll, a metal belt, or the like; inflation forming which involves extruding the raw materials into a tube using an annular die, and cooling the tube with air or water while inflating the tube to a certain ratio through the intratube pressure; calender forming which involves rolling kneaded materials into a sheet using a plurality of heat rolls; and roll forming.

The thermoplastic resin film layer is preferably formed by a calender forming method or a cast forming method.

According to the calender forming method, the thermoplastic resin composition constituting the thermoplastic resin film layer is extruded from between two rolls while kneaded with a heated roll, and repetitively rolled between the two rolls. The thermoplastic resin film layer is obtained by pressing the thermoplastic resin film layer against a cooling roll for cooling while controlling the thickness of the thermoplastic resin film layer by the control of the rotating speed and take-over speed of each roll.

According to the cast forming method, the thermoplastic resin composition constituting the thermoplastic resin film layer is supplied to an extruder and melted, and the thermoplastic resin composition is extruded into a sheet using a T-die connected to the extruder. The extruded thermoplastic resin composition is cooled by pressing against a cooling roll to obtain the thermoplastic resin film layer.

When the thermoplastic resin film layer has a multilayer configuration, a known method can be appropriately used. Specific examples thereof include a multilayer die method using a feed block, a multi-manifold, or the like, and an extrusion lamination method using a plurality of dies, both of which can each be used alone or can be used in combination.

For example, one layer of the thermoplastic resin film layer may be formed by the cast forming and stretched, if necessary, through the use of difference in peripheral speed among rolls, or one layer of the thermoplastic resin film layer may be obtained by the calender forming method. Then, a resin composition constituting the other layers of the thermoplastic resin film layer can be meltlaminated thereon to prepare the laminate.

The thermoplastic resin film layer may have a 2-layer or more multilayer configuration. In the case of stretching any layer constituting the thermoplastic resin film layer, the stretching method is not particularly limited, and various known methods can be used.

Specifically, the stretching of each layer may be uniaxial stretching or biaxial stretching, or each layer may be unstretched. The direction of stretching may be a longitudinal direction or a lateral direction. The biaxial stretching may be simultaneous stretching or successive stretching.

In the case of stretching a cast-formed film, examples of the stretching method include a longitudinal stretching method utilizing difference in peripheral speed among roll groups, a lateral stretching method using a tenter oven, a rolling method, and a simultaneous biaxial stretching method using a tenter oven and a linear motor in combination. In the case of stretching an inflated film, examples of the stretching method include a simultaneous biaxial stretching method based on a tubular method.

The stretching conditions for the thermoplastic resin film layer are not particularly limited and are appropriately determined in consideration of the characteristics of the thermoplastic resin used, etc.

For example, in the case of stretching a propylene homopolymer or its copolymer used as the thermoplastic resin in one direction, the stretch ratio is approximately 1.2 to 12 times, preferably 2 times or more and preferably 10 times or less. The stretch ratio for biaxial stretching is 1.5 to 60 times, preferably 4 times or more and preferably 50 times or less, in terms of an area ratio.

In the case of stretching an ethylene-based resin used as the thermoplastic resin containing 45% or more of the inorganic fine powder in one direction, the stretch ratio is approximately 1.2 to 5 times, preferably 2 times or more and preferably 4 times or less. The stretch ratio for biaxial stretching is 1.5 to 15 times, preferably 2 times or more and preferably 10 times or less, in terms of an area ratio.

in the case of stretching any of other thermoplastic resins in one direction, the stretch ratio is approximately 1.2 to 10 times, preferably 2 times or more and preferably 5 times or less. The stretch ratio for biaxial stretching is 1.5 to 20 times, preferably 4 times or more and preferably 12 times or less, in terms of an area ratio.

The stretching temperature may fall within a known temperature range to be suitable for thermoplastic resins, from equal to or higher than the glass transition temperature to equal to or lower than the melting point of a crystal portion. Specifically, when the thermoplastic resin is a propylene homopolymer (melting point: 155 to 167°C), the stretching temperature is 100 to 164°C. When the thermoplastic resin is high-density polyethylene (melting point: 121 to 134°C), the stretching temperature is 70 to 133°C and is a temperature lower by 1 to 70°C than the melting point. For polyethylene terephthalate (melting point: 246 to 252°C), a temperature at which crystallization does not rapidly proceed is selected. The stretching rate is preferably 20 to 350 m/min.

Heat treatment is preferably performed after the stretching. The heat treatment temperature is preferably equal to or higher than the stretching temperature and equal to or lower than a temperature higher by 30°C than the stretching temperature.

The heat treatment reduces thermal shrinkage in the direction of stretching and reduces the winding and tightening of a product during storage and waviness or the like ascribable to shrinkage by heat and during fusion sealing. The heat treatment method is generally performed using a roll or a heat oven, or these approaches may be combined. The heat treatment is preferably performed in a state where the stretched film is kept under tension, from the viewpoint of obtaining a high treatment effect.

The film made of the thermoplastic resin thus obtained has a hydrophobic surface, which easily repels a coating composition or the like. Therefore, the film surface is preferably oxidized before lamination of the surface coating layer or the pressure-sensitive adhesive layer. The oxidized film surface not only facilitates uniformly applying a coating composition and a pressure-sensitive adhesive to the film surface but allows the surface coating layer to adhere firmly to the thermoplastic resin film layer and the thermoplastic resin film layer to adhere firmly to the pressure-sensitive adhesive layer. As a result, the durability of the printed layer mentioned later and the durability of the pressure-sensitive adhesive in use as an adhesive label are easily enhanced.

Examples of the surface oxidation treatment can include corona discharge treatment, flame treatment, plasma treatment, glow discharge treatment, and ozone treatment. Among them, corona discharge treatment or plasma treatment is preferably used.

The oxidation treatment amount for corona discharge treatment is preferably 10 $W \cdot min/m^2$ (600 $J/m^2$) or more, more preferably 20 $W \cdot min/m^2$ (1,200 $J/m^2$) or more. When the oxidation treatment amount is 20 $W \cdot min/m^2$ (1,200 $J/m^2$) or more, stable and effective oxidation treatment can be performed.

Also, the oxidation treatment amount for corona discharge treatment is preferably 200 $W \cdot min/m^2$ (12,000 $J/m^2$) or less, more preferably 180 $W \cdot min/m^2$ (10,800 $J/m^2$) or less.

<Production of surface coating layer>

The surface coating layer is formed, for example, by coating one surface (surface on the front face side) of the thermoplastic resin film layer with a coating composition containing the component described above, followed by drying. The coating method with the coating composition is performed by coating using a die coater, a bar coater, a roll coater, a gravure coater, a spray coater, a blade coater, a reverse coater, an air-knife coater, a size press coater, or the like, or by dipping, etc.

The coating process may be performed together with the forming of the thermoplastic resin film layer in a forming line of the thermoplastic resin film layer, or may be performed as to the thermoplastic resin film layer formed in the forming line in a line different from the forming line of the thermoplastic resin film layer.

In the case of forming the supporting layer by a stretching method, the coating may be performed before the stretching step or may be performed after the stretching step. If necessary, excess solvent may be removed by a drying step using an oven or the like to form the surface coating layer.

In this way, the laminate comprising the surface coating layer and the thermoplastic resin film layer can be obtained.

<<Method for producing adhesive label>>

<Production of pressure-sensitive adhesive layer>

The pressure-sensitive adhesive layer is formed by coating another surface (surface on the side that does not face the surface coating layer; surface on the back face side) of the thermoplastic resin film layer in the laminate thus obtained with the pressure-sensitive adhesive described above, followed by drying. The pressure-sensitive adhesive may be applied directly to the surface of the thermoplastic resin film layer for formation, or the pressure-sensitive adhesive may be applied to the surface of the release liner to form the pressure-sensitive adhesive layer, which is then applied to the surface of the thermoplastic resin film layer.

Examples of the coating apparatus for the pressure-sensitive adhesive can include die coaters, bar coaters, comma coaters, lip coaters, roll coaters, gravure coaters, spray coaters, blade coaters, reverse coaters, and air-knife coaters.

The coating film of the pressure-sensitive adhesive or the like applied with such a coating apparatus is smoothened, if necessary, and subjected to a drying step to form the pressure-sensitive adhesive layer.

The coating mass of the pressure-sensitive adhesive is not particularly limited and is preferably 3 $g/m^2$ or more, more preferably 10 $g/m^2$ or more, in terms of a solid content after drying. Also, the coating mass is preferably 60 $g/m^2$ or less, more preferably 40 $g/m^2$ or less, in terms of a solid content after drying.

When peeling occurs at the adhesive interface between the thermoplastic resin film layer and the pressure-sensitive adhesive layer due to small adhesive force therebetween, a surface on the back face side of the thermoplastic resin film layer is preferably coated with an anchor coating composition before establishment of the pressure-sensitive adhesive.

Examples of the anchor coating composition can include polyurethane, polyisocyanate/polyether polyol, polyisocyanate/polyester polyol/polyethylenimine, and alkyl titanate. The surface of the thermoplastic resin film layer can be coated with such an anchor coating composition, for example, as a solution of the anchor coating composition dissolved in an organic solvent such as methanol, ethyl acetate, toluene, or hexane, or water.

The coating mass of the anchor coating composition is preferably 0.01 $g/m^2$ or more, more preferably 0.02 $g/m^2$ or more, in terms of a solid content after drying. Also, the coating mass is preferably 5 $g/m^2$ or less, more preferably 2 $g/m^2$ or less, in terms of a solid content after drying.

<Production of printed layer>

The printed layer is formed on the surface coating layer in the laminate thus obtained by an electrophotographic printing approach or an inkjet printing approach using a laser printer or the like.

In the electrophotographic printing approach, the printed layer (printed toner layer) mainly used was formed by printing in the Yupo label double weight mode using a color laser printer (trade name: CASIO SPEEDIA GE5000, manufactured by Casio Computer Co., Ltd.) and color toner attached to the color laser printer. However, the printer, the toner, the printing settings, and the printing contents for use in the production of the printed layer in the adhesive label of the present invention, are not particularly limited and can be arbitrarily changed without departing from the intent of the present invention.

For example, an adhesive label produced using a color copier DocuCentre-IV (manufactured by Fuji Xerox Co., Ltd.), a color copier DocuCentre-V (manufactured by Fuji Xerox Co., Ltd.), a full color label printer JP725-LC (manufactured by Japan Electronics Ind., Inc.), or a color copier e-STUDIO2505AC (manufactured by Toshiba Tec Corp.) as the printer and color toner attached thereto has been found to exhibit printing quality, adhesion of the printed layer (toner), and abrasion resistance of the printed layer (toner) equivalent to those of the adhesive label produced using the color laser printer described above.

In the ink jet printing approach, the printed layer mainly used was formed by printing by irradiation with 160 W UV at a printing rate of 25 m/min using a color ink jet printer (trade name: Label Meister EM-250A, manufactured by Iwatsu Electric Co., Ltd.) and color ink attached to the inkjet printer.

However, the printer, the ink, the printing settings, and the printing contents for use in the production of the printed layer in the adhesive label according to the present invention, are not particularly limited and can be arbitrarily changed without departing from the intent of the present invention.

For example, an adhesive label produced using ULF-3042FX (manufactured by Mimaki Engineering Co., Ltd.) or Oce Arizona 250GT (manufactured by Oce Holding B.V.) as the printer and color ink attached thereto has been found to exhibit printing quality, adhesion of the printed layer (ink), and abrasion resistance of the printed layer (ink) equivalent to those of the adhesive label produced using the inkjet printer described above.

<GHS label>

The adhesive label according to the present invention is preferably used as a GHS label on which label information based on GHS established by the United Nations is printed.

GHS sets hazard classes for each of physicochemical hazards, toxicological health effects, and toxicological environmental effects, and label elements are determined according to hazard categories determined according to classification criteria.

The GHS label is a writing, a print, or a graphic summarizing information on the hazards of chemicals, and is attached or printed on a container of a hazardous substance or an external package thereof.

The label elements include product identifiers, signal words, pictograms, hazard statements, precautionary statements, and identification of suppliers, and labels with a black symbol boxed in a red frame are prescribed for the pictograms.

Chemical substance manufacturers which transport hazardous substances in international waters are required to satisfy the specifications of BS5609: 1986 for this GHS label, and two important sections of label performance and printing performance are present as criteria thereof.

In section 2, the section of label performance, the permanence and durability of label materials and adhesives are tested under conditions involving marine exposure, temperature change, weathering, sea water spray, and exposure to sunlight. This test is conducted for blank materials coated with adhesives in order to determine the permanence and durability of label materials and adhesives.

In section 3, the section of printing performance, the abrasion resistance and permanence of prints on labels are tested by artificial weathering (sea water spray and sunlight), a tape peeling test, and an abrasion resistance test.

The test on printing performance is conducted by rolling over a sample in a mixture of artificial sea water and sand. For the adhesive label according to the present invention, the adhesive label comprising the printed layer formed by electrophotographic printing under the following printing conditions is evaluated for abrasion resistance by an abrasion test under the following testing conditions.

Printing conditions;

For the electrophotographic printing, a color chart is printed in the Yupo label double weight mode using a color laser printer (trade name: CASIO SPEEDIA GE5000, manufactured by Casio Computer Co., Ltd.) and color toner (genuine toner) attached to the color laser printer. The printing is performed using at least black color, and gray scale evaluation is performed.

The printing is preferably performed using red color in addition to the black color and more preferably performed further using green, blue, cyan, magenta and/or yellow color. The black printed portion tends to easily cause the separation of the printed layer (toner) as compared with the other color printed portions.

For the inkjet printing, a color chart is printed by irradiation with 160 W UV at a printing rate of 25 m/min using a color inkjet printer (trade name: Label Meister EM-250A, manufactured by Iwatsu Electric Co., Ltd.) and color ink attached to this equipment. The printing is performed using at least black color, and gray scale evaluation is performed.

The printing is more preferably performed using magenta, cyan and yellow colors in addition to the black color. The black printed portion tends to easily cause the separation of the printed layer (ink) as compared with the other color printed portions.

Testing conditions;

The abrasion resistance is evaluated in accordance with BS5609: 1986 using an abrasion tester (trade name: Model QT12, manufactured by LORTONE, Inc.).

Specifically, 442 g of sea sand (particle size: 300 to 500 $\mu$m) and 1770 g of clean water are placed in a tumbler (drum) having a diameter of 170 mm and a height of 195 mm. Printed matter (adhesive label) is wrapped around a hollow SUS (stainless steel) 304 bar (length: 190 mm, diameter: 25 mm) and set to the tester. After rotation 500 times at 25 rpm (20 minutes), the printed matter is recovered. Sand is washed off, and water is wiped off. The obtained sample is subjected to evaluation.

The adhesion (abrasion resistance) of the printed layer is evaluated by gray scale evaluation from the separation of the printed layer on a color basis in comparison with a blank. The criterial therefor is based on BS1006-A02C: 1978 and is as follows.

5: no separation of the print is able to be confirmed.
4: the print is slightly separated.
3: the print is separated to a certain degree, but is recognizable.
2: the print is severely separated, but is recognizable.
1: the print is very severely separated.

In the criteria, 1 represents fail, and 2 to 5 represent pass. 3 or higher is more preferred.

Examples

Hereinafter, the present invention will be described further specifically with reference to Examples, Comparative Examples and Test Examples. The scope of the present invention is not limited by the specific examples given below. The term "%" described below means % by mass unless otherwise specified.

[Coating composition 1 for surface coating layer]

0.69 parts by mass of polyethylenimine (trade name: Suftomer AC72, manufactured by Mitsubishi Chemical Corp., solid concentration: 32% by mass) and 0.88 parts by mass of polyamide-epichlorohydrin (trade name: Wet Strength Agent WS4082, manufactured by Seiko PMC Corp., solid concentration: 25% by mass) described in Table 1, and water were mixed and stirred for 5 minutes. Then, pH of the mixture was adjusted to 4.5 to 5.5 using acetic acid having a concentration of 10%.
Subsequently, to the pH-adjusted mixed solution, 40 parts by mass of a water dispersion of cationic urethane resin (trade name: Hydran CP7050, manufactured by DIC Corp., solid concentration: 25% by mass) as the polyurethane resin, and 14.33 parts by mass of a water dispersion of colloidal silica surface-treated with alumina (trade name: Snowtex AK, manufactured by Nissan Chemical Corp., solid concentration: 23% by mass) as the fine particle having a metal oxide (metal oxide particle) were added, and water was further added, to adjust the final total solid concentration of the mixture to 11.2% by mass. The mixture was stirred for 5 minutes to prepare coating composition 1 for the surface coating layer.
The content percentage of the polyurethane resin based on the total solid content of the coating composition 1 for the surface coating layer, i.e., the surface coating layer, was 72.8% by mass, and the content percentage of the metal oxide particle in this layer was 24% by mass.

[Coating composition 2 for surface coating layer]

2.06 parts by mass of polyethylenimine (trade name: Suftomer AC72, manufactured by Mitsubishi Chemical Corp., solid concentration: 32% by mass) and 2.64 parts by mass of polyamide-epichlorohydrin (trade name: Wet Strength Agent WS4082, manufactured by Seiko PMC Corp., solid concentration: 25% by mass) described in Table 1, and water were mixed and stirred for 5 minutes. Then, pH of the mixture was adjusted to 4.5 to 5.5 using acetic acid having a concentration of 10%.
Subsequently, to the pH-adjusted mixed solution, 21 parts by mass of a water dispersion of cationic urethane resin (trade name: Hydran CP7050, manufactured by DIC Corp., solid concentration: 25% by mass) as the polyurethane resin, and 30 parts by mass of a water dispersion of colloidal silica surface-treated with alumina (trade name: Snowtex AK, manufactured by Nissan Chemical Corp., solid concentration: 23% by mass) as the metal oxide particle were added, and water was further added, to adjust the final total solid concentration of the mixture to 11.2% by mass. The mixture was stirred for 5 minutes to prepare coating composition 2 for the surface coating layer.
The content percentage of the polyurethane resin based on the total solid content of the coating composition 2 for the surface coating layer, i.e., the surface coating layer, was 39% by mass, and the content percentage of the metal oxide particle in this layer was 51.2% by mass.

[Coating composition 3 for surface coating layer]

Coating composition 3 for the surface coating layer was prepared in the same way as the method for preparing the coating composition 1 for the surface coating layer described above, by adding all the materials described in Table 1, then further adding water and ethyl alcohol to adjust the final total solid concentration of the mixture to 1% by mass and the ethyl alcohol concentration to 10% by mass, and stirring the mixture for 5 minutes.
The content percentage of the polyurethane resin based on the total solid content of the coating composition 3 for the surface coating layer, i.e., the surface coating layer, was 72.8% by mass, and the content percentage of the metal oxide particle in this layer was 24% by mass.

[Coating composition 4 for surface coating layer]

Coating composition 4 for the surface coating layer was prepared in the same way as the method for preparing the coating composition 1 for the surface coating layer described above, by adding all the materials described in Table 1, then further adding water and ethyl alcohol to adjust the final total solid concentration of the mixture to 4% by mass and the ethyl alcohol concentration to 10% by mass, and stirring the mixture for 5 minutes.
The content percentage of the polyurethane resin based on the total solid content of the coating composition 4 for the surface coating layer, i.e., the surface coating layer, was 72.8% by mass, and the content percentage of the metal oxide particle in this layer was 24% by mass.

[Coating composition 5 for surface coating layer]

Coating composition 5 for the surface coating layer was prepared in the same way as the method for preparing the coating composition 1 for the surface coating layer described above, by adding all the materials described in Table 1, then further adding water to adjust the final total solid concentration of the mixture to 18.7% by mass, and stirring the mixture for 5 minutes.

The content percentage of the polyurethane resin based on the total solid content of the coating composition 5 for the surface coating layer, i.e., the surface coating layer, was 72.8% by mass, and the content percentage of the metal oxide particle in this layer was 24% by mass.

[Coating composition 6 for surface coating layer]

0.68 parts by mass of polyethylenimine (trade name: Suftomer AC72, manufactured by Mitsubishi Chemical Corp., solid concentration: 32% by mass) and 0.87 parts by mass of polyamide-epichlorohydrin (trade name: Wet Strength Agent WS4082, manufactured by Seiko PMC Corp., solid concentration: 25% by mass) described in Table 2, and water were mixed and stirred for 5 minutes. Then, pH of the mixture was adjusted to 4.5 to 5.5 using acetic acid having a concentration of 10%.

Subsequently, to the pH-adjusted mixed solution, 33 parts by mass of a water dispersion of cationic urethane resin (trade name: Hydran CP7050, manufactured by DIC Corp., solid concentration: 25% by mass) as the polyurethane resin, and 21.3 parts by mass of a water dispersion of colloidal silica surface-treated with alumina (trade name: Snowtex AK, manufactured by Nissan Chemical Corp., solid concentration: 23% by mass) as the metal oxide particle were added, and water and ethyl alcohol were further added, to adjust the final total solid concentration of the mixture to 4% by mass and the ethyl alcohol concentration to 10% by mass. The mixture was stirred for 5 minutes to prepare coating composition 6 for the surface coating layer.

The content percentage of the polyurethane resin based on the total solid content of the coating composition 6 for the surface coating layer, i.e., the surface coating layer, was 60.7% by mass, and the content percentage of the metal oxide particle in this layer was 36.1% by mass.

[Coating composition 7 for surface coating layer]

0.68 parts by mass of polyethylenimine (trade name: Suftomer AC72, manufactured by Mitsubishi Chemical Corp., solid concentration: 32% by mass) and 0.87 parts by mass of polyamide-epichlorohydrin (trade name: Wet Strength Agent WS4082, manufactured by Seiko PMC Corp., solid concentration: 25% by mass) described in Table 2, and water were mixed and stirred for 5 minutes. Then, pH of the mixture was adjusted to 4.5 to 5.5 using acetic acid having a concentration of 10%.

Subsequently, to the pH-adjusted mixed solution, 37 parts by mass of a water dispersion of cationic urethane resin (trade name: Hydran CP7050, manufactured by DIC Corp., solid concentration: 25% by mass) as the polyurethane resin, and 17 parts by mass of a water dispersion of colloidal silica surface-treated with alumina (trade name: Snowtex AK, manufactured by Nissan Chemical Corp., solid concentration: 23% by mass) as the metal oxide particle were added, and water and ethyl alcohol were further added, to adjust the final total solid concentration of the mixture to 4% by mass and the ethyl alcohol concentration to 10% by mass. The mixture was stirred for 5 minutes to prepare coating composition 7 for the surface coating layer.

The content percentage of the polyurethane resin based on the total solid content of the coating composition 7 for the surface coating layer, i.e., the surface coating layer, was 68% by mass, and the content percentage of the metal oxide particle in this layer was 28.8% by mass.

[Coating composition 8 for surface coating layer]

Coating composition 8 for the surface coating layer was prepared in the same way as the method for preparing the coating composition 7 for the surface coating layer described above, by adding all the materials described in Table 2, then further adding water to adjust the final total solid concentration of the mixture to 11.2% by mass, and stirring the mixture for 5 minutes.

The content percentage of the polyurethane resin based on the total solid content of the coating composition 8 for the surface coating layer, i.e., the surface coating layer, was 68% by mass, and the content percentage of the metal oxide particle in this layer was 28.8% by mass.

[Coating composition 9 for surface coating layer]

0.69 parts by mass of polyethylenimine (trade name: Suftomer AC72, manufactured by Mitsubishi Chemical Corp., solid concentration: 32% by mass) and 0.88 parts by mass of polyamide-epichlorohydrin (trade name: Wet Strength Agent WS4082, manufactured by Seiko PMC Corp., solid concentration: 25% by mass) described in Table 2, and water were mixed and stirred for 5 minutes. Then, pH of the mixture was adjusted to 4.5 to 5.5 using acetic acid having a concentration of 10%.

Subsequently, to the pH-adjusted mixed solution, 52 parts by mass of a water dispersion of cationic urethane resin (trade name: Hydran CP7050, manufactured by DIC Corp., solid concentration: 25% by mass) as the polyurethane resin, and 1.2 parts by mass of a water dispersion of colloidal silica surface-treated with alumina (trade name: Snowtex AK, manufactured by Nissan Chemical Corp., solid concentration: 23% by mass) as the metal oxide particle were added, and water was further added, to adjust the final total solid concentration of the mixture to 11.2% by mass. The mixture was stirred for 5 minutes to prepare coating composition 9 for the surface coating layer.

The content percentage of the polyurethane resin based on the total solid content of the coating composition 9 for the surface coating layer, i.e., the surface coating layer, was 94.8% by mass, and the content percentage of the metal oxide particle was 2% by mass.

[Thermoplastic resin film layer]

A thermoplastic resin film layer having a 3-layer structure of highly smooth layer/substrate layer/strengthening layer from the front face side was formed by the following procedures.

First, 14 parts by mass of a propylene homopolymer (trade name: Novatec PP MA3, manufactured by Japan Polypropylene Corp.), 60 parts by mass of a propylene homopolymer (trade name: Novatec PP EA8, manufactured by Japan Polypropylene Corp.), 10 parts by mass of high-density polyethylene (trade name: Novatec HD HJ360, manufactured by Japan Polyethylene Corp.), 15 parts by mass of a heavy calcium carbonate fine particle (trade name: Softon 1800, manufactured by Bihoku Funka Kogyo Co., Ltd.), and 1 part by mass of a rutile-type titanium dioxide fine particle (trade name: Tipaque CR60, manufactured by Ishihara Sangyo Kaisha, Ltd.) described in Table 3 were mixed as materials for the substrate layer, and this mixture was supplied to an extruder with its cylinder temperature set to 260°C, melt-kneaded, then supplied to a T-die set to 260°C, and extruded into a sheet. The obtained sheet was cooled to approximately 70°C with a cooling roll to obtain an unstretched sheet.

Subsequently, the obtained unstretched sheet was reheated to 140°C, then stretched at a ratio of 5 times in the longitudinal direction through the use of difference in peripheral speed among roll groups, and cooled to approximately 60°C with a cooling roll to obtain a sheet longitudinally stretched at a ratio of 5 times.

Next, 20 parts by mass of a propylene homopolymer (trade name: Novatec PP MA3, manufactured by Japan Polypropylene Corp.), 30 parts by mass of a propylene homopolymer (trade name: Novatec PP EA8, manufactured by Japan Polypropylene Corp.), 4.5 parts by mass of high-density polyethylene (trade name: Novatec HD HJ360, manufactured by Japan Polyethylene Corp.), 45 parts by mass of a heavy calcium carbonate fine particle (trade name: Softon 1800, manufactured by Bihoku Funka Kogyo Co., Ltd.), and 0.5 parts by mass of a rutile-type titanium dioxide fine particle (trade name: Tipaque CR60, manufactured by Ishihara Sangyo Kaisha, Ltd.) described in Table 3 were mixed as materials for the highly smooth layer, and this mixture was supplied to an extruder with its cylinder temperature set to 260°C, melt-kneaded, then supplied to a T-die set to 260°C, and extruded into a sheet. The obtained sheet was laminated onto one face of the sheet longitudinally stretched at a ratio of 5 times obtained above. Subsequently, both the sheets were led to between two metal cooling rolls, joined together by compression, and cooled to room temperature with the cooling rolls to obtain a laminated resin sheet having a 2-layer structure of highly smooth layer/substrate layer.

Next, 14 parts by mass of a propylene homopolymer (trade name: Novatec PP MA3, manufactured by Japan Polypropylene Corp.), 60 parts by mass of a propylene homopolymer (trade name: Novatec PP EA8, manufactured by Japan Polypropylene Corp.), 10 parts by mass of high-density polyethylene (trade name: Novatec HD HJ360, manufactured by Japan Polyethylene Corp.), 15 parts by mass of a heavy calcium carbonate fine particle (trade name: Softon 1800, manufactured by Bihoku Funka Kogyo Co., Ltd.), and 1 part by mass of a rutile-type titanium dioxide fine particle (trade name: Tipaque CR60, manufactured by Ishihara Sangyo Kaisha, Ltd.) described in Table 3 were mixed as materials for the strengthening layer, and this mixture was supplied to an extruder with its cylinder temperature set to 260°C, melt-kneaded, then supplied to a T-die set to 260°C, and extruded into a sheet. The obtained sheet was laminated onto the surface on the substrate layer side of the laminated resin sheet obtained above. Subsequently, both the sheets were led to between two metal cooling rolls, joined together by compression, and cooled to room temperature with the cooling rolls to obtain a laminated resin sheet having a 3-layer structure of highly smooth layer/substrate layer/strengthening layer.

The laminated resin sheet having a 3-layer structure obtained above was reheated to 155°C using a tenter oven, stretched at a ratio of 9 times in the lateral direction using a tenter, and then further annealed in a heat set zone adjusted to 160°C. Subsequently, the sheet was cooled to approximately 60°C with a cooling roll, and the edge part was slit to obtain a stretched resin film with total thickness: 80 $\mu$m (each layer thickness: 20 $\mu$m (highly smooth layer)/40 $\mu$m (substrate layer)/20 $\mu$m (strengthening layer)), total density: 0.83 g/cm$^3$, and opacity: 89%. This stretched resin film was used as a thermoplastic resin film layer in Examples and Comparative Examples.

The thickness, the density and the opacity were each determined by a method mentioned later.

<Laminate>

[Examples 1-1, 1-5, and 1-6 and Comparative Example 1-1]

Corona discharge treatment was performed on both surfaces of the thermoplastic resin film layer obtained above at a watt density of 60 W·min/m$^2$ each.

Subsequently, the surface on the highly smooth layer side of the thermoplastic resin film layer subjected to corona discharge treatment was coated with coating composition 1, 8, 9 or 2 for the surface coating layer in a wet coating mass of 5 g/m$^2$ using a bar coater, and dried for 1 minute in an oven of 70°C to obtain each laminate having a 2-layer structure of surface coating layer/thermoplastic resin film layer (Example 1-1, Example 1-5, Example 1-6 and Comparative Example 1-1). The amount of the surface coating layer applied (dry coating mass) onto the thermoplastic resin film layer surface in the obtained laminate was 0.56 g/m$^2$ in terms of a solid content after drying per unit area in all the samples.

[Comparative Example 1-2]

Likewise, the surface on the highly smooth layer side of the thermoplastic resin film layer subjected to corona discharge treatment was coated with coating composition 3 for the surface coating layer in a wet coating mass of 5 g/m$^2$ using a bar coater, and dried for 1 minute in an oven of 70°C to obtain a laminate having a 2-layer structure of surface coating layer/thermoplastic resin film layer. The dry coating mass in the obtained laminate was 0.05 g/m$^2$.

[Examples 1-2 and 1-4 and Comparative Example 1-3]

Corona discharge treatment was performed on both surfaces of the thermoplastic resin film layer obtained above at a watt density of 60 W·min/m$^2$ each.

Subsequently, the surface on the highly smooth layer side of the thermoplastic resin film layer subjected to corona discharge treatment was coated with coating composition 4, 7 or 6 for the surface coating layer in a wet coating mass of 5 g/m$^2$ using a bar coater, and dried for 1 minute in an oven of 70°C to obtain each laminate having a 2-layer structure of surface coating layer/thermoplastic resin film layer (Example 1-2, Example 1-4 and Comparative Example 1-3). The dry coating mass in the obtained laminate was 0.2 g/m$^2$ in all the samples.

[Example 1-3]

Likewise, the surface on the highly smooth layer side of the thermoplastic resin film layer subjected to corona discharge treatment was coated with coating composition 5 for the surface coating layer in a wet coating mass of 80 g/m$^2$ using a bar coater, and dried for 10 minutes in an oven of 70°C to obtain a laminate having a 2-layer structure of surface coating layer/thermoplastic resin film layer. The dry coating mass in the obtained laminate was 15 g/m$^2$.

[Examples 2-1 to 2-6 and Comparative Examples 2-1 to 2-3]

[Adhesive label]

Silicone-treated glassine paper (trade name: G7B, manufactured by Oji Tac Co., Ltd.) was used as a release sheet. The silicone-treated surface of the release sheet was coated with a mixed solution of a solvent-based acrylic pressure-sensitive adhesive (trade name: Oribain BPS 1109, manufactured by Toyochem Co., Ltd.), an isocyanate-based crosslinking agent (trade name: Oribain BHS8515, manufactured by Toyochem Co., Ltd.), and toluene mixed at a mass ratio of 100:3:45 using a comma coater such that the basis weight after drying was 25 g/m$^2$. The coated surface was dried to form a pressure-sensitive adhesive layer.

Subsequently, the pressure-sensitive adhesive layer and the laminate of any of Examples 1-1 to 1-6 and Comparative Examples 1-1 to 1-3 obtained above were laminated such that the pressure-sensitive adhesive layer and the thermoplastic resin film layer (on the strengthening layer side) were in contact. The resultant was led to between two pressure bonding rolls, and the surface coating layer and the glassine paper were allowed to adhere to each other under pressure so that the pressure-sensitive adhesive layer was formed on the surface on the strengthening layer side (surface on the back face side) of the thermoplastic resin film layer to obtain each adhesive label having a 3-layer structure of surface coating layer/thermoplastic resin film layer/pressure-sensitive adhesive layer.

[Printed layer]

A test image involving a 7-color chart of red, green, blue, magenta, cyan, yellow and black, and pictogram information based on GHS recommended by the United Nations was printed in the Yupo label double weight mode on the surface coating layer of each adhesive label obtained above using a color laser printer (trade name: CASIO SPEEDIA GE5000, manufactured by Casio Computer Co., Ltd.) and color toner attached to this equipment so that a printed layer was established to obtain each adhesive label comprising printed layer/surface coating layer/thermoplastic resin film layer/pressure-sensitive adhesive layer in the presented order.

The obtained adhesive label was evaluated for the adhesion of the printed layer (dry conditions and water immersion conditions) and the abrasion resistance of the printed layer by procedures given below. The results are summarized in Tables 4 and 5.

Also, a test image involving a 4-color chart of magenta, cyan, yellow and black, and pictogram information based on GHS recommended by the United Nations was printed by irradiation with 160 W UV at a printing rate of 25 m/min on the surface coating layer of the adhesive label of Example 2-1 obtained above using a color inkjet printer (trade name: Label Meister EM-250A, manufactured by Iwatsu Electric Co., Ltd.) and color ink attached to this equipment so that a printed layer was established to obtain an adhesive label comprising printed layer/surface coating layer/thermoplastic resin film layer/pressure-sensitive adhesive layer in the presented order.

The obtained adhesive label was evaluated for the adhesion of the printed layer (dry conditions and water immersion conditions) and the abrasion resistance of the printed layer by procedures given below. The results are shown in Table 6.

< Printing performance evaluation>

(Adhesion of printed layer: dry conditions)

Cellophane tape (trade name: Cellotape(R) LP-18, manufactured by Nichiban Co., Ltd.) was attached onto the printed layer (onto the test image) of each obtained adhesive label and allowed to adhere firmly thereto by finger pressure. Then, the cellophane tape was peeled by 180 degrees at a rate that did not cause the internal fracture of the surface coating layer or the thermoplastic resin film layer. The adhesion of the printed layer was determined according to the following criteria from the printed image remaining on the adhesive label.

A: no separation of the print was observed.
B: although separation was observed in less than 10% of the printing area, the sample had high peeling strength upon separation and had no practical problem.
C: although separation was observed in 10% or more and less than 50% of the printing area, the sample had high peeling strength upon separation and was practically usable.
D: the separation of the print was observed, and the sample had low peeling strength upon separation and was not practically suitable.

(Adhesion of printed layer: water immersion conditions)

Each obtained adhesive label was immersed for 24 hours in water (ion exchange water) filled in a tray such that the adhesive label did not float. Then, the adhesive label was taken out thereof, and water was wiped off with tissues. The adhesion of the printed layer (water immersion conditions) was evaluated according to the same procedures and the same criteria as those for the section (Adhesion of printed layer: dry conditions).

(Abrasion resistance of printed layer)

The abrasion resistance of the printed layer of each obtained adhesive label was evaluated by an abrasion test by procedures given below according to Section 3 of the British Standards BS5609: 1986. The degree of separation of the printed layer in the adhesive label thus tested was determined on a gray scale.

Abrasion test conditions;

A sample of 150 mm × 75 mm size including the test image was cut out of the obtained adhesive label. This sample was attached so as to wrap around the base of a hollow stainless bar (made of SUS304, 190 mm in length × 25 mm in diameter, mass: 500 g).

Subsequently, outside and inside caps of a tumbler (hollow container of 195 mm in height × 170 mm in diameter) were removed, and 442 g of sea sand (manufactured by Wako Pure Chemical Industries, Ltd., particle size: 300 to 500 μm), and 1770 g of clean water (tap water of Kamisu city, Ibaraki, Japan) were placed in the tumbler. The stainless bar around which the sample was wrapped, and a blank stainless bar were set in the tumbler such that the blank stainless bar preceded in the direction of rotation. The inside and outside caps were attached to the tumbler and fixed with a fastener.

The tumbler was set on a rotating table of an abrasion tester (trade name: Model QT12, manufactured by LORTONE, Inc.). The tumbler was rotated a total of 500 times at a rate of 25 rpm for 20 minutes in the circumferential direction.

Then, the tumbler was got off the rotating table, and the stainless bar with the sample was taken out of the tumbler. Sand was washed off, and water was wiped off with tissues to collect the sample.

The sample after the abrasion test and a blank without the abrasion test were positioned side-by-side and compared. The degree of separation of the color chart portion in the printed layer of the sample after the abrasion test was determined on the gray scale of 1 to 5 given below on the basis of BS1006-A02C: 1978.

According to the standards of BS5609: 1986, a sample rated on a gray scale of 2 or higher is determined as pass, and a gray scale of 3 or higher is preferred. The black printed portion is a portion where the separation of the print occurs easily as compared with the other color printed portions.

> 5: no separation of the print was able to be confirmed.
> 4: the print was slightly separated.
> 3: the print was separated to a certain degree, but was recognizable.
> 2: the print was severely separated, but was recognizable.
> 1: the print was very severely separated.

<Dry coating mass>

The dry coating mass of the surface coating layer in each obtained adhesive label was determined by subtracting mass of the thermoplastic resin film layer before coating with the coating composition for the surface coating layer from the mass of the 2-layer laminate immediately after the coating to determine a wet coating mass, and multiplying this wet coating mass by the solid concentration of the coating composition for the surface coating layer to determine a coating mass after drying.

<Thickness>

The thickness of the whole thermoplastic resin film layer was measured using a constant pressure thickness gauge (equipment name: PG-01J, manufactured by Teclock Corp.) on the basis of JIS K7130: 1999 "Plastics. - Film and sheeting - Determination of thickness".

The thickness of each layer in the thermoplastic resin film layer was determined as follows: a sample to be measured was cooled to a temperature of - 60°C or lower in liquid nitrogen. The sample placed on a glass plate was cut at a right angle with a razor blade (trade name: Proline Blade, manufactured by Schick Japan K.K.) to prepare a sample for cross-sectional measurement. The obtained sample was cross-sectionally observed under a scanning electron microscope (equipment name: JSM-6490, manufactured by JEOL Ltd.), and a boundary line of each layer was determined from composition and appearance and multiplied by the ratio of the observed thickness of each layer to the total thickness.

<Basis weight>

The basis weight (grammage) of the thermoplastic resin film layer was determined on the basis of JIS P8124: 2011 "Paper and board - Determination of grammage" by measuring the mass of a sample punched into a size of 100 mm × 100 mm with an electric balance, and dividing the determined mass by an area.

<Density>

A value obtained by dividing the basis weight by the total thickness was used as the density of the thermoplastic resin film layer.

<Opacity>

The opacity of the thermoplastic resin film layer was determined in accordance with ISO 2471: 1998 (JIS P8149:

2000) "Paper and board - Determination of opacity (paper backing) - Diffuse reflectance method" and indicated by a percentage value of the ratio between a single-sheet luminous reflectance factor measured by pressing a black tube against the back to be measured and an intrinsic luminous reflectance factor measured by pressing a white standard plate against the back of the same sample to be measured (single-sheet luminous reflectance factor/intrinsic luminous reflectance factor).

[Table 1]

Table 1

| Material | Material solid concentration (% by mass) | Material contained in coating composition for surface coating layer | | | | | | | | | |
|---|---|---|---|---|---|---|---|---|---|---|---|
| | | Coating composition 1 | | Coating composition 2 | | Coating composition 3 | | Coating composition 4 | | Coating composition 5 | |
| | | Material content ratio (parts by mass) | Solid content percentage in surface coating layer (% by mass) | Material content ratio (parts by mass) | Solid content percentage in surface coating layer (% by mass) | Material content ratio (parts by mass) | Solid content percentage in surface coating layer (% by mass) | Material content ratio (parts by mass) | Solid content percentage in surface coating layer (% by mass) | Material content ratio (parts by mass) | Solid content percentage in surface coating layer (% by mass) |
| Polyurethane resin Water dispersion of urethane resin having average particle size of 75 nm Trade name: Hydran CP7050, manufactured by DIC Corp. | 25 | 40 | 72.8 | 21 | 39 | 40 | 72.8 | 40 | 72.8 | 40 | 72.8 |
| Metal oxide particle Alumina-surfaced treated colloidal silica having primary particle size of 10 to 15 nm Trade name: Snowtex AK, manufactured by Nissan Chemical Corp. | 23 | 14.33 | 24 | 30 | 51.2 | 14.33 | 24 | 14.33 | 24 | 14.33 | 24 |

| Material | Material solid concentration (% by mass) | Material contained in coating composition for surface coating layer | | | | | | | | | |
| | | Coating composition 1 | | Coating composition 2 | | Coating composition 3 | | Coating composition 4 | | Coating composition 5 | |
| | | Material content ratio (parts by mass) | Solid content percentage in surface coating layer (% by mass) | Material content ratio (parts by mass) | Solid content percentage in surface coating layer (% by mass) | Material content ratio (parts by mass) | Solid content percentage in surface coating layer (% by mass) | Material content ratio (parts by mass) | Solid content percentage in surface coating layer (% by mass) | Material content ratio (parts by mass) | Solid content percentage in surface coating layer (% by mass) |
|---|---|---|---|---|---|---|---|---|---|---|---|
| Polyethylenimine Trade name: Suftomer AC72, manufactured by Mitsubishi Chemical Corp. | 32 | 0.69 | 1.6 | 2.06 | 4.9 | 0.69 | 1.6 | 0.69 | 1.6 | 0.69 | 1.6 |
| Polyamide-epichlorohydrin Trade name: Wet Strength Agent WS4082, manufactured by Seiko PMC Corp. | 25 | 0.88 | 1.6 | 2.64 | 4.9 | 0.88 | 1.6 | 0.88 | 1.6 | 0.88 | 1.6 |
| Total solid concentration in coating composition (% by mass) | | 11.2 | | 11.2 | | 1 | | 4 | | 18.7 | |

EP 3 779 933 B1

[Table 2]

Table 2

| Material | Material solid concentration (% by mass) | Coating composition 6 | | Coating composition 7 | | Coating composition 8 | | Coating composition 9 | |
|---|---|---|---|---|---|---|---|---|---|
| | | Material content ratio (parts by mass) | Solid content percentage in surface coating layer (% by mass) | Material content ratio (parts by mass) | Solid content percentage in surface coating layer (% by mass) | Material content ratio (parts by mass) | Solid content percentage in surface coating layer (% by mass) | Material content ratio (parts by mass) | Solid content percentage in surface coating layer (% by mass) |
| Polyurethane resin Water dispersion of urethane resin having average particle size of 75 nm Trade name: Hydran CP7050, manufactured by DIC Corp. | 25 | 33 | 60.7 | 37 | 68 | 37 | 68 | 52 | 94.8 |
| Metal oxide particle Alumina-surfaced treated colloidal silica having primary particle size of 10 to 15 nm Trade name: Snowtex AK, manufactured by Nissan Chemical Corp. | 23 | 21.3 | 36.1 | 17 | 28.8 | 17 | 28.8 | 1.2 | 2 |
| Polyethylenimine Trade name: Suftomer AC72, manufactured by Mitsubishi Chemical Corp. | 32 | 0.68 | 1.6 | 0.68 | 1.6 | 0.68 | 1.6 | 0.69 | 1.6 |

28

(continued)

| Material | Material solid concentration (% by mass) | Material contained in coating composition for surface coating layer | | | | | | | |
|---|---|---|---|---|---|---|---|---|---|
| | | Coating composition 6 | | Coating composition 7 | | Coating composition 8 | | Coating composition 9 | |
| | | Material content ratio (parts by mass) | Solid content percentage in surface coating layer (% by mass) | Material content ratio (parts by mass) | Solid content percentage in surface coating layer (% by mass) | Material content ratio (parts by mass) | Solid content percentage in surface coating layer (% by mass) | Material content ratio (parts by mass) | Solid content percentage in surface coating layer (% by mass) |
| Polyamide-epichlorohydrin Trade name: Wet Strength Agent WS4082, manufactured by Seiko PMC Corp. | 25 | 0.87 | 1.6 | 0.87 | 1.6 | 0.87 | 1.6 | 0.88 | 1.6 |
| Total solid concentration in coating composition (% by mass) | | 4 | | 4 | | 11.2 | | 11.2 | |

[Table 3]

Table 3

| Material | | Concentration of material contained in each layer in thermoplastic resin film layer (% by mass) | | |
|---|---|---|---|---|
| | | Highly smooth layer | Substrate layer | Strengthening layer |
| Thermoplastic resin | Propylene homopolymer Trade name: Novatec PP MA3, manufactured by Japan Polypropylene Corp. MFR (JIS-K7210): 11 g/10 min, density: 0.90 g/cm$^3$ | 20 | 14 | 14 |
| | Propylene homopolymer Trade name: Novatec PP EA8, manufactured by Japan Polypropylene Corp. MFR (JIS-K7210): 0.8 g/10 min, density: 0.90 g/cm$^3$ | 30 | 60 | 60 |
| | High-density polyethylene Trade name: Novatec HD HJ360, manufactured by Japan Polyethylene Corp. MFR (JIS-K7210): 5.5 g/10 min, density: 0.951 g/cm$^3$ | 4.5 | 10 | 10 |
| Inorganic fine powder | Heavy calcium carbonate fine particle Trade name: Softon 1800, manufactured by Bihoku Funka Kogyo Co., Ltd. Volume-average particle size: 1.8 μm | 45 | 15 | 15 |
| | Rutile-type titanium dioxide fine particle Trade name: Tipaque CR60, manufactured by Ishihara Sangyo Kaisha, Ltd. Volume-average particle size: 0.2 μm | 0.5 | 1 | 1 |

[Table 4]

Table 4

| | Surface coating layer formation conditions | | | Electrophotographic print evaluation | | | |
| | | | | Adhesion of printed layer | | BS5609:1986 Abrasion resistance of printed layer | |
| | Coating composition for surface coating layer | Wet coating mass g/m² | Dry coating mass g/m² | Dry conditions | Water immersion conditions | Gray scale evaluation (black) | Determination |
|---|---|---|---|---|---|---|---|
| Example 2-1 | Coating composition 1 | 5 | 0.56 | A | A | 3 | Pass |
| Comparative Example 2-1 | Coating composition 2 | 5 | 0.56 | A | B | 1 | Fail |
| Comparative Example 2-2 | Coating composition 3 | 5 | 0.05 | D | D | 1 | Fail |
| Example 2-2 | Coating composition 4 | 5 | 0.2 | B | B | 2 | Pass |
| Example 2-3 | Coating composition 5 | 80 | 15 | A | A | 3 | Pass |
| Comparative Example 2-3 | Coating composition 6 | 5 | 0.2 | C | c | 1 | Fail |
| Example 2-4 | Coating composition 7 | 5 | 0.2 | B | C | 2 | Pass |
| Example 2-5 | Coating composition 8 | 5 | 0.56 | B | B | 3 | Pass |
| Example 2-6 | Coating composition 9 | 5 | 0.56 | A | A | 4 | Pass |

[Table 5]

Table 5

| | Electrophotographic print evaluation BS5609: 1986 Gray scale evaluation of abrasion resistance of printed layer | | | | | | |
| | Red | Green | Blue | Magenta | Cyan | Yellow | Black |
|---|---|---|---|---|---|---|---|
| Example 2-1 | 3 | 3 | 3 | 3 | 3 | 4 | 3 |
| Comparative Example 2-1 | 2 | 2 | 2 | 2 | 2 | 2.5 | 1 |
| Example 2-2 | 2 | 2 | 2 | 2 | 2 | 3 | 2 |
| Example 2-3 | 3 | 3 | 3 | 3 | 3 | 4 | 3 |

(continued)

| | Electrophotographic print evaluation BS5609: 1986 Gray scale evaluation of abrasion resistance of printed layer | | | | | | |
| --- | --- | --- | --- | --- | --- | --- | --- |
| | Red | Green | Blue | Magenta | Cyan | Yellow | Black |
| Example 2-4 | 2 | 2 | 2 | 2 | 2 | 3 | 2 |
| Example 2-5 | 3 | 3 | 3 | 3 | 3 | 4 | 3 |
| Example 2-6 | 4 | 4 | 4 | 4 | 4 | 4.5 | 4 |

[Table 6]

Table 6

| | Surface coating layer formation conditions | | | Ink jet print evaluation | | | |
| --- | --- | --- | --- | --- | --- | --- | --- |
| | Coating composition for surface coating layer | Wet coating mass g/m$^2$ | Dry coating mass g/m$^2$ | Adhesion of printed layer | | BS5609:1986 Abrasion resistance of printed layer | |
| | | | | Dry conditions | Water immersion conditions | Gray scale evaluation (black) | Determination |
| Example 2-1 | Coating composition 1 | 5 | 0.56 | A | B | 3 | Pass |

These results demonstrated that the adhesive label according to the present invention is excellent in the adhesion of the printed layer not only under dry conditions but under water immersion conditions, and also exhibits excellent abrasion resistance even in a strict evaluation test of BS5609: 1986.

The present invention is described above in detail with reference to the specific embodiments. However, it is obvious to those skilled in the art that various changes or modifications can be made therein without departing from the spirit and scope of the present invention. The present application is based on the Japanese patent application filed on March 30, 2018 (Japanese Patent Application No. 2018-068719), the contents of which are incorporated herein by reference.

Industrial Applicability

The adhesive label according to the present invention satisfies strict printing performance required for GHS labels and as such, is also very useful as a material for GHS labels.

Reference Signs List

1: adhesive label
2: printed layer
3: surface coating layer
4: thermoplastic resin film layer
5: pressure-sensitive adhesive layer

**Claims**

1. A laminate comprising a surface coating layer and a thermoplastic resin film layer, wherein

the surface coating layer contains 70 to 99% by mass of a polyurethane resin and 1 to 25% by mass of colloidal silica sol having a metal oxide layer on the surface of colloidal silica,

the metal oxide contains aluminum,

an amount of the surface coating layer applied to the thermoplastic resin film layer is 0.07 to 20 g/m$^2$ in terms of a solid content after drying per unit area, and

the thermoplastic resin film layer contains an olefin-based resin.

2. An adhesive label having a pressure-sensitive adhesive layer disposed on one surface of a laminate, wherein

the laminate is a laminate according to claim 1 comprising a surface coating layer and a thermoplastic resin film layer, and

the adhesive label comprises the surface coating layer, the thermoplastic resin film layer, and the pressure-sensitive adhesive layer in the presented order.

3. The adhesive label according to claim 2, wherein a printed layer displayed by electrophotographic printing or ink jet printing is disposed on a surface of the surface coating layer on a side that does not face the thermoplastic resin film layer, wherein

abrasion resistance of a black printed portion of the printed layer as measured in accordance with BS5609: 1986 is 2 or higher in gray scale evaluation.

**Patentansprüche**

1. Laminat, umfassend eine Oberflächendeckschicht und eine thermoplastische Harzfilmschicht, wobei

die Oberflächendeckschicht 70 bis 99% Massen-% Polyurethanharz und 1 bis 25 Massen-% kolloidalen Kieselsols mit einer Metalloxidschicht auf der Oberfläche des kolloidalen Kiesels enthält,

das Metalloxid Aluminium enthält,

die Menge der Oberflächendeckschicht, die auf die thermoplastische Harzschicht aufgebracht ist, 0,07 bis 20 g/m$^2$ in Bezug auf einen Feststoffgehalt nach dem Trocknen per Einheitsfläche beträgt, und

die thermoplastische Harzschicht ein olefinbasiertes Harz enthält.

2. Klebeetikett mit einer drucksensitiven Klebeschicht, die auf einer Oberfläche eines Laminats angeordnet ist, wobei

das Laminat ein Laminat nach Anspruch 1 ist, das eine Oberflächendeckschicht und eine thermoplastische Harzfilmschicht umfasst, und

das Klebeetikett die Oberflächendeckschicht, die thermoplastische Harzfilmschicht und die drucksensitive Klebeschicht in der dargelegten Reihenfolge umfasst.

3. Klebeetikett nach Anspruch 2, wobei eine gedruckte Schicht, die durch elektrofotografisches Drucken oder Tintenstrahldrucken angezeigt ist, auf einer Oberfläche der Oberflächendeckschicht auf einer Seite angeordnet ist, die der thermoplastischen Harzfilmschicht nicht zugewandt ist, wobei eine Abrasionsresistenz eines schwarzen Druckabschnitts der gedruckten Schicht, gemessen in Übereinstimmung mit BS5609: 1986, 2 oder mehr in einer Graustufenwertung beträgt.

**Revendications**

1. Stratifié comprenant une couche de revêtement de surface et une couche de film de résine thermoplastique, dans lequel

la couche de revêtement de surface contient de 70 à 99 % en masse d'une résine de polyuréthane et de 1 à 25 % en masse de sol de silice colloïdale présentant une couche d'oxyde de métal sur la surface de silice colloïdale,

l'oxyde de métal contient de l'aluminium,

une quantité de la couche de revêtement de surface appliquée à la couche de film de résine thermoplastique est de 0,07 à 20 g/m$^2$ en termes de contenu solide après séchage par unité de surface, et

la couche de film de résine thermoplastique contient une résine à base d'oléfine.

**2.** Étiquette adhésive présentant une couche adhésive sensible à la pression disposée sur une surface d'un stratifié, dans laquelle

le stratifié est un stratifié selon la revendication 1 comprenant une couche de revêtement de surface et une couche de film de résine thermoplastique, et

l'étiquette adhésive comprend la couche de revêtement de surface, la couche de film de résine thermoplastique et la couche adhésive sensible à la pression dans l'ordre présenté.

**3.** Étiquette adhésive selon la revendication 2, dans laquelle une couche imprimée affichée par impression électrophotographique ou par impression à jet d'encre est disposée sur une surface de la couche de revêtement de surface sur un côté qui n'est pas face à la couche de film de résine thermoplastique, dans laquelle

une résistance à l'abrasion d'une partie imprimée en noir de la couche imprimée qui est mesurée selon BS5609: 1986 est 2 ou plus en évaluation d'échelle de niveaux de gris.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001034004 A
- US 4837075 A
- JP 1105960 U
- JP 2000290411 A
- JP 2003345052 A
- WO 2015072331 A
- JP 2016169311 A
- JP 2018068719 A

### Non-patent literature cited in the description

- DATABASE WPI; Week 200163. Thomson Scientific